(19)

Europäisches
Patentamt
European
Patent Office
Office européen
des brevets

(11) **EP 4 398 158 A1**

(12) **EUROPEAN PATENT APPLICATION**

(43) Date of publication:
**10.07.2024 Bulletin 2024/28**

(21) Application number: **23150615.5**

(22) Date of filing: **06.01.2023**

(51) International Patent Classification (IPC):
**G06N 3/092** (2023.01)          **G06N 3/084** (2023.01)
**G06N 3/048** (2023.01)

(52) Cooperative Patent Classification (CPC):
**G06N 3/092; G06N 3/084;** G06N 3/048

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **DeepMind Technologies Limited**
**London EC4A 3TW (GB)**

(72) Inventors:
- **van Hasselt, Hado**
  **London, EC4A 3TW (GB)**
- **Schmitt, Simon**
  **London, EC4A 3TW (GB)**

(74) Representative: **Marks & Clerk GST**
**1 New York Street**
**Manchester M1 4HD (GB)**

(54) **REINFORCEMENT LEARNING USING EPISTEMIC VALUE ESTIMATION**

(57)     Methods, systems, and apparatus, including computer programs encoded on a computer storage medium, for implementing a control system of selecting an action to be performed by a reinforcement learning agent, based on an observation characterizing a current state of an environment. The control system is trained based on a distribution of neural network model parameters derived using a database of previous experiences in the environment.

FIG. 1

**Description**

BACKGROUND

This specification relates to reinforcement learning.

In a reinforcement learning system, an agent interacts with an environment by performing actions that are selected by the reinforcement learning system in response to receiving observations that characterize the current state of the environment.

Some reinforcement learning systems select the action to be performed by the agent in response to receiving a given observation in accordance with an output of a neural network.

Neural networks are machine learning models that employ one or more layers of nonlinear units ("neural units") to predict an output for a received input. Some neural networks are deep neural networks that include one or more hidden layers in addition to an output layer. The output of each hidden layer is used as input to the next layer in the network, i.e., the next hidden layer or the output layer. Each layer of the network generates an output from a received input in accordance with current values of a respective set of parameters.

SUMMARY

This specification describes a reinforcement learning system implemented as computer programs on one or more computers in one or more locations.

In general terms, the present disclosure proposes that an agent control system for selecting actions to be taken by an agent is trained based on a distribution of a value function defined by a plurality of model parameters of a neural network of the agent control system. The distribution of the value function is evaluated using a posterior distribution for those model parameters, derived from a database of actions taken by the agent when the environment was in corresponding states, and corresponding rewards received. Thus, updates to the policy model can be based on the posterior distribution for the model parameters, rather than just a single approximate current value for each of those respective model parameters.

According to a first aspect there is provided a computer-implemented method for training a neural network of an agent control system for controlling an agent to perform a task in an environment. The neural network is configured to receive an input characterizing the state of the environment and to generate an output, and the control system is configured to select an action for the agent to perform based on the output of the neural network. The method employs a database of observations of the state of the environment, corresponding actions performed by the agent when the environment was in that state, corresponding successive observations of successive states of the environment (e.g. if the observations of the environment are at a sequence of time steps, then, for each observation at a given time step, the corresponding successive observation may be an observation of the state of the environment at the next time step, i.e. after the agent has taken the corresponding action at the given time step). The database also includes rewards associated with the corresponding actions and indicative of the contribution of the corresponding actions to performing the task.

The neural network is based on a plurality of model parameters. The neural network is generally a structure (typically a predetermined structure) of neural units, and the model parameters include a corresponding (proper) sub-set of the model parameters for each of the neural units. The corresponding sub-set of the model parameters for each neural unit defines the function the neural unit performs on its inputs to generate a corresponding output of the neural unit. The expression "the neural network based on certain values of the model parameters" (e.g. "current values", "sampled values" or "provisional values" of the model parameters) means the neural network in the case that the model parameters take those certain values.

The neural network is configured (i.e. the model parameters are iteratively chosen, as described below), upon receiving input data comprising an observation and an action, to generate a reward value. For example, the reward value may be an estimate of a return received if the reinforcement learning agent performs the action in response to the observation. For example, the return may be a sum (e.g. weighted by a discount factor) of a sequence of rewards which the agent will receive in multiple corresponding successive future time steps (a future evolution of the environment as the agent acts), if the agent performs a certain action at the current time step.

The method includes repeatedly updating current values of the model parameters by:

sampling corresponding values ("sampled values") for each of the model parameters from a distribution based on a provisional value for each model parameter and a respective knowledge parameter for the model parameter (and optionally further knowledge parameters as discussed below, such as further knowledge parameters which relate to corresponding pairs (or higher order groups) of the model parameters); and
updating current values of the model parameters to reduce the discrepancy, for at least one observation from the database, between (i) a reward value for the observation and the corresponding action calculated by the neural network based on the current values of the model parameters, and (ii) a target reward value based on a modified reward value for the corresponding successive observation calculated by the neural network based on the sampled values of the model parameters.

The use of the modified reward value based on the sampled values for the model parameters is motivated by the fact that for many environments there are two types of uncertainty when a neural network of a reinforcement learning system models a return value associated with a task and dependent upon actions an agent takes. Firstly, for many environments, there is "return uncertainty", which means that the reward received when an action is taken is intrinsically not (exactly) predictable. In other words, the best possible prediction of the reward would itself be a distribution. In the proposed process, the current values of the model parameters evolve such that the neural network based on the current values of the model parameters, models the return uncertainty. Secondly, there is "epistemic" uncertainty, which means uncertainty about how well the distribution of rewards predicted by the neural network matches the actual reward distribution. The epistemic uncertainty decreases with more observed data, while the return uncertainty, by definition, is invariant to it. The knowledge parameters may be selected to represent the epistemic uncertainty (in general terms, each knowledge parameter may indicate a width of the posterior distribution for the corresponding model parameter), so that the modified reward values are samples from a distribution reflecting this uncertainty. Thus, the distribution of the target reward value reflects the posterior distribution of the model parameters. The update to the model parameters is thus in accordance with this posterior distribution, which means that the update causes the neural network to give a better estimate of the distribution of rewards associated with actions. This in turn means that it is particularly suitable for use in methods of selecting actions.

The concept of training using a modified reward value based on the sampled model parameters is applicable to any reinforcement learning algorithm which employs a value function. Many such algorithms are known, such as the family of algorithms known as Q-learning, or the family of algorithms known as actor-critic learning methods.

As noted, the sampled model parameters are obtained based on provisional values of the model parameters. The provisional values may be derived from the current values of the model parameters. In one case, the provisional value of each model parameter may actually be the current value of the model parameter. However, certain advantages such as greater algorithmic stability may arise if the provisional values of each model parameter, while being related to the current values, vary more slowly. For example, the provisional values may only be updated to equal the current values at intervals, e.g. following a plurality of the updates described above to the current values of the model parameters.

The knowledge parameters are related to parameters of a Fisher information matrix (FIM). In particular, the system determines a Fisher Information Matrix (FIM) of the parameters of the neural network with respect to the task. For each of the parameters, the respective knowledge parameter may be based on (e.g. proportional to, or, more generally, proportional to a positive power of) a corresponding value on a diagonal of the FIM. That is, each value on the diagonal of the FIM corresponds to a different parameter of the neural network.

Note that in some embodiments, the only components of the FIM which are calculated are the diagonal terms (i.e. off-diagonal components are not evaluated, or are not used to define the distribution of model parameters). In this case, the model parameter distribution may be a composed of independent distributions for each respective model parameter, characterized by the corresponding knowledge parameter, such that the sampled values may be selected independently from the respective distribution. For example, the sampled value for each model parameter may be selected from a distribution (e.g. the normal distribution) centered on the respective provisional value of the model parameter and having a standard deviation which is inversely related to the respective knowledge parameter.

More generally, however, further parameters of the FIM (i.e. one or more off-diagonal components, which may be considered as further knowledge parameters which relate to corresponding pairs of the model parameters) may be maintained, e.g. iteratively varied, to produce a model parameter distribution defining correlations between the model parameters. In this case, the model parameter distribution from which the sampled values are selected may be a multi-variate Gaussian function centered on the respective provisional values of the model parameters and with a covariance matrix based on parameters of the FIM, i.e. the diagonal terms of the FIM matrix and the one or more off-diagonal diagonal terms. In principle, further knowledge parameters can be maintained, and iteratively varied, for all pairs of the model parameters, i.e. all off-diagonal positions. Alternatively, further knowledge parameters may be defined for only a (selected) sub-set of the pairs of model parameters. The one or more off-diagonal terms of the FIM matrix which are maintained and iteratively varied may be selected based on the structure of the neural network, e.g. to comprise further knowledge parameters which define correlations between pairs of the sub-set of model parameters defining the function of a given neural unit (knowledge parameters defining correlations between model parameters for different neural units may not be maintained), and/or to comprise further knowledge parameters which define correlations between model parameters relating to different neural units in the same layer of the neural network (knowledge parameters defining correlations between model parameters for neural units in different layers may be not be maintained).

The knowledge parameters may be trained jointly with the model parameters (i.e. updates to the knowledge parameters are substantially simultaneous with updates to the current values of the model parameters, or interleaved with them). The updates to the respective knowledge parameter for each parameter may be such as to bring it closer to a corresponding sensitivity value indicative of the sensitivity to the corresponding model parameter of the discrepancy (i.e. difference) between the reward value and a value based on the target reward value (e.g. the target reward value plus a random factor; this random factor provides a "distributional update" to the knowledge parameters). The sensitivity value may be an increasing function of the magnitude of the corresponding component of the gradient of the discrepancy with respect to the values of the parameters, e.g. proportional to the square of the corresponding component of the gradient of the discrepancy with respect to the values of the parameters.

The target reward value may include a term which is a sum of the reward associated with the action (i.e. the reward specified by the database as corresponding to the action) and a future reward term proportional to an output of the neural network for the sampled values of the model parameters and the subsequent observation. This future reward term may for example be proportional to the maximum, over a plurality of possible actions, of the reward value output of the neural network, when defined by the sampled values of the model parameters, upon receiving the subsequent observation and the possible action.

The neural network may have any known form. However, it may be composed of one or more layers, such as a sequence of layers, each layer being composed of a plurality of neural units, the outputs of the neural units in each layer of the sequence, except the last layer of the sequence, being inputs to the neural units of the successive layer of the sequence. In some implementations, the one or more layers include one or more fully-connected layers. In some implementations (particularly ones in which the observations include one or more images), the one or more layers include one or more convolutional layers. In some implementations, the one or more layers include one or more recurrent neural network layers.

The output of each neural unit may be a non-linear "activation" function of an argument which is based on corresponding ones of the parameters and the inputs to the neural unit. Empirically, it has been found that to be advantageous for training if the derivative (differential) of the function with respect to the argument is non-zero. This may be true over all possible values of the argument, or at least over a range of possible values of the argument. In particular, it is advantageous if the activation function is not a function (such as a ReLU (rectified linear unit) function) having a critical value for the argument above (or below) which the derivative of the activation function is zero.

In some examples of the present disclosure, the method is performed offline (e.g. as the neural network is trained it does not control the agent so as to generate new observations to populate the database). Conversely, in other examples, the database is supplemented jointly with the training of the model parameters (i.e. substantially simultaneously with the updating or the model parameters, or interleaved with updates to the model parameters) by receiving a current observation of the environment, selecting a corresponding action for the agent to perform using the neural network, transmitting control data to the agent to cause the agent to perform the action, receiving a corresponding subsequent observation of the environment (e.g. at the next time step) and a corresponding reward, and adding a tuple of the current observation, the corresponding action, the corresponding subsequent observation, and the corresponding reward, to the database. Optionally, this may be performed multiple times ("iterations"), such that the database is supplemented by a "trajectory" of corresponding successive tuples (i.e. a sequence of tuples), each tuple (but the last) having a subsequent observation which the observation of the next tuple of the sequence.

In some implementations, the action for the agent to perform is selected by determining outputs (reward values) of the neural network upon receiving the current observation and, successively, each of a plurality of corresponding possible actions. The action is then selected based on the plurality of outputs, for example as the action for which the neural network output is highest. Alternatively, the neural network outputs may define a likelihood distribution over actions in the set of possible actions to be performed by the agent in response to the current observation.

Optionally, rather than selecting each action using single values for the model parameters (e.g. the current values or the provisional values), the distribution of the parameters is used, by obtaining a second sampled value for each of the model parameters as a selection from a distribution based on the provisional (or optionally current) value of the model parameter and the respective knowledge parameter. Then, for each of a plurality of possible actions the agent might take, a corresponding second modified reward value may be calculated by the neural network based on the current observation, the second sampled values of the model parameters, and the corresponding one of the plurality of actions. The action for the agent to perform is then selected from the plurality of actions based on the corresponding second modified reward values. Note that the same second sampled values may optionally be used for all iterations of the trajectory.

Once the neural network has been trained, it may be used to select actions for the agent to perform, e.g. in the conventional way. Thus, it may be used to control the agent to perform the task in the environment by repeatedly:

  receiving an observation of a state of the environment,
  for each of a plurality of actions (e.g. the set of actions the agent could take, or a proper subset of those actions),
  obtaining a corresponding reward value calculated based on the observation by the trained neural network;

selecting an action for the agent to perform from the plurality of actions based on the corresponding reward values; and transmitting control data to the agent to cause the agent to perform the selected action. Note that this process the reward values may be obtained based on the final values for the model parameters (i.e. the last "current values" obtained), without adding a noise to them based on the knowledge parameters. Indeed, the knowledge parameters may be discarded following the training of the model parameters of the neural network.

In some implementations, the action for the agent to perform is selected by determining outputs (reward values) of the neural network upon receiving the current observation and, successively, each of a plurality of corresponding possible actions. The action is then selected based on the plurality of outputs, for example as the action for which the neural network output is highest. Alternatively, the neural network outputs may define a likelihood distribution over actions in the set of possible actions to be performed by the agent in response to the current observation.

The environment may be real-world environment, and the agent may be a real-world apparatus (e.g. a robot or other electromechanical device). The agent control system may be a component of the apparatus (e.g. located within a common housing with one or more actuators of the apparatus and/or carried with the apparatus as the apparatus moves within the environment). The training of the neural network may be performed on-board the apparatus, and/or by one or more computers which are not on-board the apparatus, such as separate server system(s).

Particular embodiments of the subject matter described in this specification can be implemented so as to realize one or more of the following advantages.

The reinforcement learning system as described in this specification selects actions to be performed by an agent interacting with an environment based on network outputs generated by a neural network. By generating network outputs in accordance with the posterior distribution of the model parameters, the neural network drives the agent to explore the environment and thereby improves the performance of the agent in accomplishing tasks (e.g., navigating to goal locations in the environment). This is achieved without confusing uncertainty due to an incompletely learnt value function ("epistemic uncertainty") and any return uncertainty which is due to randomness in the environment (the "return uncertainty").

Furthermore, in contrast to some known reinforcement learning algorithms (Q-Learning of the neural network with $\varepsilon$-greedy exploration), actions may never be selected completely at random, so there is less risk of a dangerous action being taken, or one which nullifies progress towards a task which has already been made.

Moreover, the exploration strategy implemented by the system as described in this specification need not require modifying the objective function used to train the neural network. In contrast, some conventional exploration strategies modify the objective function, for example, by adding a term to the objective function that encourages the action selection policy to be more entropic. By modifying the objective function, these conventional exploration strategies may cause the action selection policy learnt by the system during training to select actions that do not optimize the return received by the system, and by extension, do not optimize the performance of the agent in completing tasks. Therefore, the exploration strategy implemented by the system as described in this specification may cause the system to learn an action selection policy that results in the selection of actions that cause the agent to perform tasks more effectively than systems using some conventional exploration strategies.

Due at least to the previously described advantages, a system implementing the exploration strategy as described in this specification can be trained to achieve an acceptable level of performance more rapidly than systems implementing conventional exploration strategies. Therefore, a system implementing the exploration strategy as described in this specification may consume fewer computational resources (e.g., memory and computing power) during training than systems implementing conventional exploration strategies.

In a particular example, the reinforcement learning system as described in this specification can select actions to be performed by a robot (e.g., a mechanical agent) interacting with a real-world environment. For example, the robot may be performing tasks in a manufacturing environment (e.g., assembling electrical components) or in a warehouse environment (e.g., transporting packages in a warehouse). By selecting the actions to be performed by the robot using a reinforcement learning system as described in this specification, the robot may be trained to achieve an acceptable level of performance more quickly and may adapt to previously unseen environmental conditions more readily than if the actions to be performed by the robot were selected by a conventional system.

The details of one or more embodiments of the subject matter of this specification are set forth in the accompanying drawings and the description below. Other features, aspects, and advantages of the subject matter will become apparent from the description, the drawings, and the claims.

BRIEF DESCRIPTION OF THE DRAWINGS

FIG. 1 is an illustration of an example of a reinforcement learning situation involving a reinforcement learning system;

FIG. 2 is shows the structure of an example reinforcement learning system.

FIG. 3 is a flow diagram of an example process for training a neural network of a reinforcement learning system.

FIG. 4 is a flow diagram of sub-steps of one of the steps of the process of FIG. 3.

FIG. 5 is a flow diagram of sub-sets of another of the steps of the process of FIG. 3.

FIG. 6 is experimental results comparing an example of the present disclosure and a comparative example.

FIG. 7 compares example reinforcement learning techniques.

FIG. 8 shows a robot employing a control system.

Like reference numbers and designations in the various drawings indicate like elements.

DETAILED DESCRIPTION

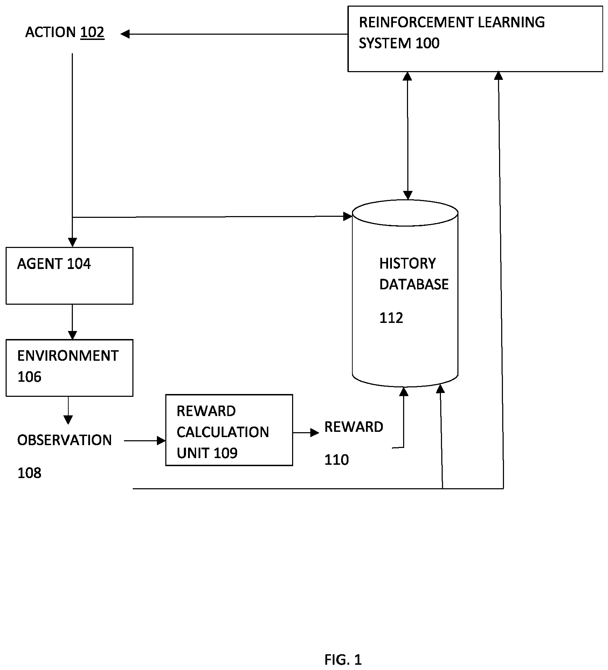

FIG. 1 shows an example reinforcement learning situation (scenario) which employs a reinforcement learning system 100. The reinforcement learning system 100 is an example of a system implemented as computer programs on one or more computers in one or more locations in which the systems, components, and techniques described below are implemented.

The reinforcement learning system 100 selects actions 102 to be performed by an agent 104 interacting with an environment 106 at each of multiple successive time steps. At each time step, the system 100 receives data characterizing the current state of the environment 106, e.g., an image of the environment 106, and selects an action 102 to be performed by the agent 104 in response to the received data. Data characterizing a state of the environment 106 will be referred to in this specification as an observation 108.

The system 100 described herein is widely applicable and is not limited to one specific implementation. However, for illustrative purposes, a small number of example implementations are described below.

In some implementations, the environment 106 is a real-world environment, the agent 104 is a mechanical (or electro-mechanical) agent interacting with the real-world environment, e.g., a robot or an autonomous or semi-autonomous land, air, or sea vehicle operating in or navigating through the environment, and the actions are actions taken by the mechanical agent in the real-world environment to perform the task. For example, the agent 104 may be a robot interacting with the environment 106 to accomplish a specific task, e.g., to locate or manipulate an object of interest in the environment or to move an object of interest to a specified location in the environment or to navigate to a specified destination in the environment.

In these implementations, the observations 108 may include, e.g., one or more of: images, object position data, and sensor data to capture observations as the agent interacts with the environment, for example sensor data from an image, distance, or position sensor or from an actuator. For example in the case of a robot, the observations 108 may include data characterizing the current state of the robot, e.g., one or more of: joint position, joint velocity, joint force, torque or acceleration, e.g., gravity-compensated torque feedback, and global or relative pose of an item held by the robot. In the case of a robot or other mechanical agent or vehicle the observations 108 may similarly include one or more of the position, linear or angular velocity, force, torque or acceleration, and global or relative pose of one or more parts of the agent. The observations may be defined in 1, 2 or 3 dimensions, and may be absolute and/or relative observations. The observations 108 may also include, for example, sensed electronic signals such as motor current or a temperature signal; and/or image or video data for example captured by a camera or a LIDAR sensor, e.g., data from sensors of the agent or data from sensors that are located separately from the agent in the environment.

In these implementations, the actions 102 may be control signals to control the robot or other mechanical agent, e.g., torques for the joints of the robot or higher-level control commands, or the autonomous or semi-autonomous land, air, sea vehicle, e.g., torques to the control surface or other control elements e.g. steering control elements of the vehicle, or higher-level control commands. The control signals can include for example, position, velocity, or force/torque/acceleration data for one or more joints of a robot or parts of another mechanical agent. The control signals may also or instead include electronic control data such as motor control data, or more generally data for controlling one or more electronic devices within the environment the control of which has an effect on the observed state of the environment. For example in the case of an autonomous or semi-autonomous land or air or sea vehicle the control signals may define actions to control navigation e.g. steering, and movement e.g., braking and/or acceleration of the vehicle.

In some implementations the environment 106 is a simulation of the above-described real-world environment, and the agent 104 is implemented as one or more computers interacting with the simulated environment. For example the simulated environment may be a simulation of a robot or vehicle and the reinforcement learning system 100 may be trained on the simulation and then, once trained, used in the real-world.

In some implementations the environment 106 is a real-world manufacturing environment for manufacturing a product, such as a chemical, biological, or mechanical product, or a food product. As used herein a "manufacturing" a product also includes refining a starting material to create a product, or treating a starting material e.g. to remove pollutants, to generate a cleaned or recycled product. The manufacturing plant may comprise a plurality of manufacturing units such as vessels for chemical or biological substances, or machines, e.g. robots, for processing solid or other materials. The manufacturing units are configured such that an intermediate version or component of the product is moveable between the manufacturing units during manufacture of the product, e.g. via pipes or mechanical conveyance. As used herein manufacture of a product also includes manufacture of a food product by a kitchen robot.

The agent 104 may comprise an electronic agent configured to control a manufacturing unit, or a machine such as a robot, that operates to manufacture the product. That is, the agent may comprise a control system configured to control the manufacture of the chemical, biological, or mechanical product. For example the control system may be configured to control one or more of the manufacturing units or machines or to control movement of an intermediate version or component of the product between the manufacturing units or machines.

As one example, a task performed by the agent 104 may comprise a task to manufacture the product or an intermediate version or component thereof. As another example, a task performed by the agent 104 may comprise a task to control, e.g. minimize, use of a resource such as a task to control electrical power consumption, or water consumption, or the consumption of any material or consumable used in the manufacturing process.

The actions may comprise control actions to control the use of a machine or a manufacturing unit for processing a solid or liquid material to manufacture the product, or an intermediate or component thereof, or to control movement of an intermediate version or component of the product within the manufacturing environment e.g. between the manufacturing units or machines. In general the actions may be any actions that have an effect on the observed state of the environment, e.g. actions configured to adjust any of the sensed parameters described below. These may include actions to adjust the physical or chemical conditions of a manufacturing unit, or actions to control the movement of mechanical parts of a machine or joints of a robot. The actions may include actions imposing operating conditions on a manufacturing unit or machine, or actions that result in changes to settings to adjust, control, or switch on or off the operation of a manufacturing unit or machine.

The reinforcement learning situation includes a reward calculation unit 109 for generating a reward 110 (e.g. in the form of a number), typically from the observation 108. The rewards 110 may relate to a metric of performance of the task. For example in the case of a task that is to manufacture a product the metric may comprise a metric of a quantity of the product that is manufactured, a quality of the product, a speed of production of the product, or to a physical cost of performing the manufacturing task, e.g. a metric of a quantity of energy, materials, or other resources, used to perform the task. In the case of a task that is to control use a resource the metric may comprise any metric of usage of the resource. In the case of a task which is to control an electromechanical agent such as a robot to perform a manipulation of an object, the reward may indicate whether the object has been correctly manipulated according to a predefined criterion.

In general, observations 108 of a state of the environment 106 may comprise any electronic signals representing the functioning of electronic and/or mechanical items of equipment. For example a representation of the state of the environment 106 may be derived from observations 108 made by sensors sensing a state of the manufacturing environment, e.g. sensors sensing a state or configuration of the manufacturing units or machines, or sensors sensing movement of material between the manufacturing units or machines. As some examples such sensors may be configured to sense mechanical movement or force, pressure, temperature; electrical conditions such as current, voltage, frequency, impedance; quantity, level, flow/movement rate or flow/movement path of one or more materials; physical or chemical conditions e.g. a physical state, shape or configuration or a chemical state such as pH; configurations of the units or machines such as the mechanical configuration of a unit or machine, or valve configurations; image or video sensors to capture image or video observations of the manufacturing units or of the machines or movement; or any other appropriate type of sensor. In the case that the agent 104 is a machine such as a robot the observations from the sensors may include observations of position, linear or angular velocity, force, torque or acceleration, or pose of one or more parts of the machine, e.g. data characterizing the current state of the machine or robot or of an item held or processed by the machine or robot. The observations may also include, for example, sensed electronic signals such as motor current or a temperature signal, or image or video data for example from a camera or a LIDAR sensor (e.g. mounted on the machine). Sensors such as these may be part of or located separately from the agent in the environment.

In some implementations the environment 106 is the real-world environment of a service facility comprising a plurality of items of electronic equipment, such as a server farm or data center, for example a telecommunications data center, or a computer data center for storing or processing data, or any service facility. The service facility may also include ancillary control equipment that controls an operating environment of the items of equipment, for example environmental control equipment such as temperature control e.g. cooling equipment, or air flow control or air conditioning equipment. The task may comprise a task to control, e.g. minimize, use of a resource, such as a task to control electrical power consumption, or water consumption. The agent may comprise an electronic agent configured to control operation of the items of equipment, or to control operation of the ancillary, e.g. environmental, control equipment.

In general the actions 102 may be any actions that have an effect on the observed state of the environment 106, e.g. actions configured to adjust any of the sensed parameters described below. These may include actions 102 to control, or to impose operating conditions on, the items of equipment or the ancillary control equipment, e.g. actions that result in changes to settings to adjust, control, or switch on or off the operation of an item of equipment or an item of ancillary control equipment.

In general, the observations 108 of a state of the environment 106 may comprise any electronic signals representing the functioning of the facility or of equipment in the facility. For example a representation of the state of the environment 106 may be derived from observations 108 made by any sensors sensing a state of a physical environment of the facility or observations made by any sensors sensing a state of one or more of items of equipment or one or more items of ancillary control equipment. These include sensors configured to sense electrical conditions such as current, voltage, power or energy; a temperature of the facility; fluid flow, temperature or pressure within the facility or within a cooling system of the facility; or a physical facility configuration such as whether or not a vent is open.

The rewards may relate to a metric of performance of a task relating to the efficient operation of the facility. For example in the case of a task to control, e.g. minimize, use of a resource, such as a task to control use of electrical power or water, the metric may comprise any metric of use of the resource.

In some implementations the environment 106 is the real-world environment of a power generation facility e.g. a renewable power generation facility such as a solar farm or wind farm. The task may comprise a control task to control power generated by the facility, e.g. to control the delivery of electrical power to a power distribution grid, e.g. to meet demand or to reduce the risk of a mismatch between elements of the grid, or to maximize power generated by the facility. The agent may comprise an electronic agent configured to control the generation of electrical power by the facility or the coupling of generated electrical power into the grid. The actions may comprise actions to control an electrical or mechanical configuration of an electrical power generator such as the electrical or mechanical configuration of one or more renewable power generating elements e.g. to control a configuration of a wind turbine or of a solar panel or panels or mirror, or the electrical or mechanical configuration of a rotating electrical power generation machine. Mechanical control actions may, for example, comprise actions that control the conversion of an energy input to an electrical energy output, e.g. an efficiency of the conversion or a degree of coupling of the energy input to the electrical energy output. Electrical control actions may, for example, comprise actions that control one or more of a voltage, current, frequency or phase of electrical power generated.

The rewards may relate to a metric of performance of a task relating to power distribution. For example in the case of a task to control the delivery of electrical power to the power distribution grid the metric may relate to a measure of power transferred, or to a measure of an electrical mismatch between the power generation facility and the grid such as a voltage, current, frequency or phase mismatch, or to a measure of electrical power or energy loss in the power generation facility. In the case of a task to maximize the delivery of electrical power to the power distribution grid the metric may relate to a measure of electrical power or energy transferred to the grid, or to a measure of electrical power or energy loss in the power generation facility.

In general observations 108 of a state of the environment 106 may comprise any electronic signals representing the electrical or mechanical functioning of power generation equipment in the power generation facility. For example a representation of the state of the environment 106 may be derived from observations made by any sensors sensing a physical or electrical state of equipment in the power generation facility that is generating electrical power, or the physical environment of such equipment, or a condition of ancillary equipment supporting power generation equipment. Such observations may thus include observations of wind levels or solar irradiance, or of local time, date, or season. Such sensors may include sensors configured to sense electrical conditions of the equipment such as current, voltage, power or energy; temperature or cooling of the physical environment; fluid flow; or a physical configuration of the equipment; and observations of an electrical condition of the grid e.g. from local or remote sensors. Observations of a state of the environment may also comprise one or more predictions regarding future conditions of operation of the power generation equipment such as predictions of future wind levels or solar irradiance or predictions of a future electrical condition of the grid.

As another example, the environment 106 may be a chemical synthesis or protein folding environment such that each state is a respective state of a protein chain or of one or more intermediates or precursor chemicals and the agent is a computer system for determining how to fold the protein chain or synthesize the chemical. In this example, the actions are possible folding actions for folding the protein chain or actions for assembling precursor chemicals/intermediates and the result to be achieved may include, e.g., folding the protein so that the protein is stable and so that it achieves a particular biological function or providing a valid synthetic route for the chemical. As another example, the agent may be a mechanical agent that performs or controls the protein folding actions or chemical synthesis steps selected by the system automatically without human interaction. The observations may comprise direct or indirect observations of a state of the protein or chemical/ intermediates/ precursors and/or may be derived from simulation.

In a similar way the environment 106 may be a drug design environment such that each state is a respective state of a potential pharmaceutically active compound pharmaceutically active compound and the agent is a computer system for determining elements of the pharmaceutically active compound and/or a synthetic pathway for the pharmaceutically active compound. The drug/synthesis may be designed based on a reward derived from a target for the pharmaceutically active compound, for example in simulation. As another example, the agent may be a mechanical agent that performs or controls synthesis of the pharmaceutically active compound.

In some further applications, the environment 106 is a real-world environment and the agent manages distribution of tasks across computing resources e.g. on a mobile device and/or in a data center. In these implementations, the actions may include assigning tasks to particular computing resources. In these applications, the observations may include observations of computing resources such as compute and/or memory capacity, or Internet-accessible resources; and the actions may include assigning tasks to particular computing resources. The reward(s) may be configured to maximize or minimize one or more of: utilization of computing resources, electrical power, bandwidth, and computation speed.

As further example, the actions may include presenting advertisements, the observations may include advertisement impressions or a click-through count or rate, and the reward may characterize previous selections of items or content taken by one or more users.

In some cases, the observations 108 may include textual or spoken instructions provided to the agent by a third-party (e.g., an operator of the agent). For example, the agent may be an autonomous vehicle, and a user of the autonomous vehicle may provide textual or spoken instructions to the agent (e.g., to navigate to a particular location).

As another example the environment 106 may be an electrical, mechanical or electro-mechanical design environment, e.g. an environment in which the design of an electrical, mechanical or electro-mechanical entity is simulated. The simulated environment may be a simulation of a real-world environment in which the entity is intended to work. The task may be to design the entity. The observations may comprise observations that characterize the entity, i.e. observations of a mechanical shape or of an electrical, mechanical, or electro-mechanical configuration of the entity, or observations of parameters or properties of the entity. The actions may comprise actions that modify the entity e.g. that modify one or more of the observations. The rewards may comprise one or more metrics of performance of the design of the entity. For example rewards may relate to one or more physical characteristics of the entity such as weight or strength or to one or more electrical characteristics of the entity such as a measure of efficiency at performing a particular function for which the entity is designed. The design process may include outputting the design for manufacture, e.g. in the form of computer executable instructions for manufacturing the entity. The process may include making the entity according to the design. Thus a design of an entity may be optimized, e.g. by reinforcement learning, and then the optimized design output for manufacturing the entity, e.g. as computer executable instructions; an entity with the optimized design may then be manufactured.

As previously described the environment 106 may be a simulated environment. Generally in the case of a simulated environment the observations may include simulated versions of one or more of the previously described observations or types of observations and the actions may include simulated versions of one or more of the previously described actions or types of actions. For example the simulated environment may be a motion simulation environment, e.g., a driving simulation or a flight simulation, and the agent may be a simulated vehicle navigating through the motion simulation. In these implementations, the actions may be control inputs to control the simulated user or simulated vehicle. Generally the agent may be implemented as one or more computers interacting with the simulated environment.

The simulated environment may be a simulation of a particular real-world environment and agent. For example, the system may be used to select actions in the simulated environment during training or evaluation of the system and, after training, or evaluation, or both, are complete, the action selection policy may be deployed for controlling a real-world agent in the particular real-world environment that was the subject of the simulation. This can avoid unnecessary wear and tear on and damage to the real-world environment or real-world agent and can allow the control neural network to be trained and evaluated on situations that occur rarely or are difficult or unsafe to re-create in the real-world environment. For example the system may be partly trained using a simulation of a mechanical agent in a simulation of a particular real-world environment, and afterwards deployed to control the real mechanical agent in the particular real-world environment. Thus in such cases the observations of the simulated environment relate to the real-world environment, and the selected actions in the simulated environment relate to actions to be performed by the mechanical agent in the real-world environment.

In some implementations, as described above, the agent 104 may not include a human being (e.g. it is a robot). Conversely, in some implementations the agent 104 comprises a human user of a digital assistant such as a smart speaker, smart display, or other device. Then the information defining the task can be obtained from the digital assistant, and the digital assistant can be used to instruct the user based on the task.

For example, the reinforcement learning system 100 may output to the human user, via the digital assistant, instructions for actions for the user to perform at each of a plurality of time steps. The instructions may for example be generated in the form of natural language (transmitted as sound and/or text on a screen) based on actions chosen by the reinforcement learning system 100. The reinforcement learning system 100 chooses the actions such that they contribute to performing a task. A monitoring system (e.g. a video camera system) may be provided for monitoring the action (if any) which the user actually performs at each time step, in case (e.g. due to human error) it is different from the action which the reinforcement learning system instructed the user to perform. Using the monitoring system the reinforcement learning system can determine whether the task has been completed. During an on-policy training phase and/or another phase in which the history database 112 is being generated, the experience tuples may record the action which the user actually performed based on the instruction, rather than the one which the reinforcement learning system instructed the user to perform. The reward value of each experience tuple may be generated, for example, by comparing the action the user took with a corpus of data showing a human expert performing the task, e.g. using techniques known from imitation learning. Note that if the user performs actions incorrectly (i.e. performs a different action from the one the reinforcement learning system 100 instructs the user to perform) this adds one more source of noise to sources of noise which may already exist in the environment. During the training process the reinforcement learning system may identify actions which the user performs incorrectly with more than a certain probability. If so, when the reinforcement learning system instructs the user to perform such an identified action, the reinforcement learning system may warn the user to be careful. Alternatively or additionally, the reinforcement learning system may learn not to instruct the user to perform the identified actions, i.e. ones which the user is likely to perform incorrectly.

More generally, the digital assistant instructing the user may comprise receiving, at the digital assistant, a request from the user for assistance and determining, in response to the request, a series of tasks for the user to perform, e.g. steps or sub-tasks of an overall task. Then for one or more tasks of the series of tasks, e.g. for each task, e.g. until a final task of the series the digital assistant can be used to output to the user an indication of the task, e.g. step or sub-task, to be performed. This may be done using natural language, e.g. on a display and/or using a speech synthesis subsystem of the digital assistant. Visual, e.g. video, and/or audio observations of the user performing the task may be captured, e.g. using the digital assistant. A system as described above may then be used to determine whether the user has successfully achieved the task e.g. step or sub-task, i.e. from the answer as previously described. If there are further tasks to be completed the digital assistant may then, in response, progress to the next task (if any) of the series of tasks, e.g. by outputting an indication of the next task to be performed. In this way the user may be led step-by-step through a series of tasks to perform an overall task. During the training of the neural network, training rewards may be generated e.g. from video data representing examples of the overall task (if corpuses of such data are available) or from a simulation of the overall task.

As an illustrative example a user may be interacting with a digital assistant and ask for help performing an overall task consisting of multiple steps, e.g. cooking a pasta dish. While the user performs the task, the digital assistant receives audio and/or video inputs representative of the user's progress on the task, e.g. images or video or sound clips of the user cooking. The digital assistant uses a system as described above, in particular by providing it with the captured audio and/or video and a question that asks whether the user has completed a particular step, e.g. 'Has the user finished chopping the peppers?', to determine whether the user has successfully completed the step. If the answer confirms that the use has successfully completed the step then the digital assistant progresses to telling the user to perform the next step or, if at the end of the task, or if the overall task is a single-step task, then the digital assistant may indicate this to the user. The digital assistant may then stop receiving or processing audio and/or video inputs to ensure privacy and/or reduce power use.

In a further aspect there is provided a digital assistant device including a system as described above. The digital assistant can also include a user interface to enable a user to request assistance and to output information. In implementations this is a natural language user interface and may comprise a keyboard, voice input-output subsystem, and/or a display. The digital assistant can further include an assistance subsystem configured to determine, in response to the request, a series of tasks for the user to perform. In implementations this may comprise a generative (large) language model, in particular for dialog, e.g. a conversation agent such as LaMDA. The digital assistant can have an observation capture subsystem to capture visual and/or audio observations of the user performing a task; and an interface for the above-described language model neural network (which may be implemented locally or remotely). The digital assistant can also have an assistance control subsystem configured to assist the user. The assistance control subsystem can be configured to perform the steps described above, for one or more tasks e.g. of a series of tasks, e.g. until a final task of the series. More particularly the assistance control subsystem and output to the user an indication of the task to be performed, capture, using the observation capture subsystem, visual or audio observations of the user performing the task, determine from the above-described answer whether the user has successfully achieved the task. In response the digital assistant can progress to a next task of the series of tasks and/or control the digital assistant, e.g. to stop capturing observations.

In the implementations above, the environment 106 may not include a human being or animal. In other implementations, however, it may comprise a human being or animal. For example, the agent may be an autonomous vehicle in an environment 106 which is a location (e.g. a geographical location) where there are human beings (e.g. pedestrians or drivers/passengers of other vehicles) and/or animals, and the autonomous vehicle itself may optionally contain human beings. The environment 106 may also be at least one room (e.g. in a habitation) containing one or more people. The human being or animal may be an element of the environment 106 which is involved in the task, e.g. modified by the task (indeed, the environment may substantially consist of the human being or animal). For example the environment 106 may be a medical or veterinary environment containing at least one human or animal subject, and the task may relate to performing a medical (e.g. surgical) procedure on the subject. In a further implementation, the environment 106 may comprise a human user who interacts with an agent 104 which is in the form of an item of user equipment, e.g. a digital assistant. The item of user equipment provides a user interface between the user and a computer system (the same computer system(s) which implement the reinforcement learning system 100, or a different computer system). The user interface may allow the user to enter data into and/or receive data from the computer system, and the agent is controlled by the action selection policy to perform an information transfer task in relation to the user, such as providing information about a topic to the user and/or allowing the user to specify a component of a task which the computer system is to perform. For example, the information transfer task may be to teach the user a skill, such as how to speak a language or how to navigate around a geographical location; or the task may be to allow the user to define a three-dimensional shape to the computer system, e.g. so that the computer system can control an additive manufacturing (3D printing) system to produce an object having the shape. Actions may comprise outputting information to the user (e.g. in a certain format, at a certain rate, etc.) and/or configuring the interface to receive input from the user. For example, an action may comprise setting a problem for a user to perform relating to the skill (e.g. asking the user to choose between multiple options for correct usage of the language, or asking the user to speak a passage of the language out loud), and/or receiving input from the user (e.g. registering selection of one of the options, or using a microphone to record the spoken passage of the language). Rewards may be generated based upon a measure of how well the task is performed. For example, this may be done by measuring how well the user learns the topic, e.g. performs instances of the skill (e.g. as measured by an automatic skill evaluation unit of the computer system). In this way, a personalized teaching system may be provided, tailored to the aptitudes and current knowledge of the user. In another example, when the information transfer task is to specify a component of a task which the computer system is to perform, the action may comprise presenting a (visual, haptic or audio) user interface to the user which permits the user to specify an element of the component of the task, and receiving user input using the user interface. The rewards may be generated based on a measure of how well and/or easily the user can specify the component of the task for the computer system to perform, e.g. how fully or well the three-dimensional object is specified. This may be determined automatically, or a reward may be specified by the user, e.g. a subjective measure of the user experience. In this way, a personalized system may be provided for the user to control the computer system, again tailored to the aptitudes and current knowledge of the user.

Optionally, in any of the above implementations, the observation 108 at any given time step may include data from a previous time step that may be beneficial in characterizing the environment, e.g., the action performed at the previous time step, the reward received at the previous time step, or both.

The operation of the reinforcement learning situation may be considered as being a sequence of time steps (a "trajectory"), labelled by an integer index $t$. The observation 108 at a given time step is denoted $S_t$, and based on it the reinforcement learning system selects an action $A_t$ which the agent performs at that time step. At each time step $t$ (except an initial time step, which may be denoted $t=0$), the state of the environment 106 at the time step, as characterized by the observation 108 at the time step (i.e. $S_t$), depends on the state of the environment 106 at the previous time step $t-1$ and the action 102 performed by the agent 104 at the previous time step (i.e. $A_{t-1}$).

At each time step, the system 100 may receive a reward 110 (denoted $R_t$) generated, for example, by the reward calculation unit 109 based on the observation $S_t$ 108 of the current state of the environment 106, and optionally also on the action 102 of the agent 104 at the preceding time step. In general, the reward 110 is a numerical value. The reward 110 can be based on any event or aspect of the environment 106. For example, the reward 110 may indicate whether, at time $t$, the agent 104 has accomplished the task (e.g., navigating to a target location in the environment 106) or the progress of the agent 104 towards accomplishing a task.

The set of data ($S_t$, $A_t$, $R_{t+1}$, $S_{t+1}$) for a given value of $t$ is referred to as an "experience tuple". During a period of training the reinforcement learning system 110, experience tuples for multiple trajectories, denoted below by $\mathcal{D}$, are collected and stored in a history database 112. In "episode" refers to a sequence of multiple successive time steps (e.g. at least 10 time steps), which leads to a plurality of successive experience tuples which are collectively referred to as a trajectory. For example, a single trajectory may refer to a complete process of performing a task until it is determined by a termination criterion that the task has been completed, or attempting to do so until another termination criterion is met.

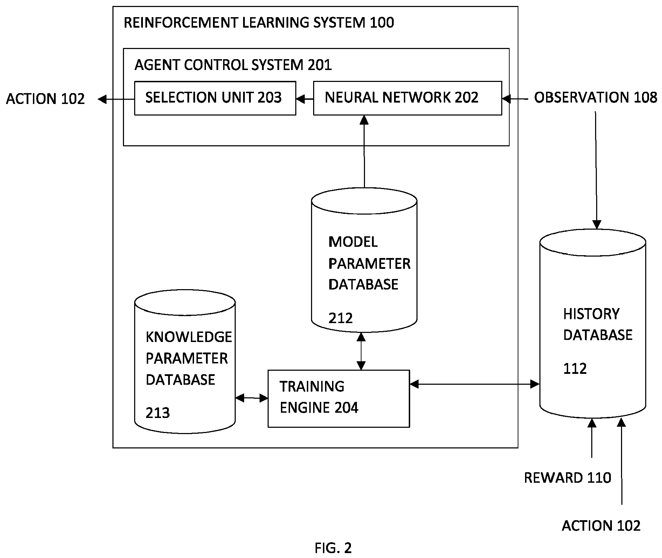

Turning to FIG. 2, a diagram is shown illustrating the operation of the reinforcement learning system 100. At each time step, the reinforcement learning system 100 selects the action 102 to be performed by the agent 104 at the time step using an agent control system 201. The agent control system 201 includes a neural network 202 which receives a network input, and generates a network output by processing the network input. The network input includes the observation 108 characterizing the state of the environment 106 at the time step. The network input also includes an action (not shown in FIG. 2), such as an action from a set of possible actions that can be performed by the agent 104. This action may be selected by the agent control system 201. For example, the agent control system 201 may successively generate multiple network inputs each including an observation 108 and including corresponding ones of a set of actions which the agent 104 can perform. These network inputs are input successively to the neural network 202 to generate respective network outputs. The network outputs are used by a selection unit 203 to select the action 102. In some implementations the network input may include other data, such as a control parameter chosen by a user.

In some implementations, as discussed extensively below, the network output is an estimate of a corresponding return that will be received by the system 100 if the agent 104 performs one or more actions in response to the observation 108. A return refers to a cumulative measure of reward generated by the reward calculation unit 109 as the agent 104 interacts with the environment 106 over multiple time steps. For example, a return may refer to a long-term time-discounted reward received by the system 100.

As noted above, in some implementations, the network input includes both the observation 108 and a given action from the set of possible actions, and the network output is an estimate of a return that will be received by the system 100 if the agent 104 performs the given action in response to the observation 108. In some of these implementations, for each action in the set of possible actions, the agent control system 201 provides successive network inputs to the neural network 202 that include the corresponding action and the observation 108 characterizing the state of the environment at the time step. For each action in the set of possible actions, the neural network 202 processes the corresponding network input including the action and the observation 108 to generate an estimate of a return that will be generated by the reward calculation unit 109 if the agent 104 performs the action in response to the observation 108. The system may select the action 102 to be performed by the agent 104 at the time step to be the action with the highest estimated return from amongst all the actions in the set of possible actions.

The neural network 202 may be of any known design, but typically includes multiple neural network layers, arranged in a sequence. Each layer is composed of a plurality of neural units and generates a respective output. The outputs of the neural units in each layer (except the last layer of the sequence) are included in an input to the successive layer of the sequence. For example, the output of each neural unit of a given layer may form, or be comprised in, an input to each neural unit of the successive layer, or to a corresponding subset of the neural units of the successive layer. The network input is the input applied to the first layer of the sequence (i.e. each of the neural units of the first layer of the network receives the network input, or a corresponding subset of it), and the network output is the output of the last layer in the sequence. The choice of the neural network 202 typically reflects the form of the observations 108. For example, in the case that each observation 108 include one or more images, the layers of the neural network may comprise one or more convolutional layers.

Each of the neural units performs a respective function ("activation function") of its inputs, defined by respective parameters. Thus the overall function of the neural network 202 is defined by the collective set of parameters, referred to a "model parameters".

For example, denoting the inputs to any given one of the neural units by $\{x_j\}$ where $j$ is an integer index, the output of the neural unit may be $f(y)$, where $y$, the argument of the activation function, is based on the inputs to the neural unit. For example, if $y = g(\sum_j w_j x_j + \beta)$, the output of the neural unit is a numerical function $f$ (e.g. a non-linear function, referred to as an activation function) of a weighted sum of its inputs. The corresponding parameters may comprise the weights $\{w_j\}$, an optional bias (offset) $\beta$ applied to the weighted sum, and/or an optional gain factor g by which the weighted sum is multiplied before being used as the input to the function $f$.

The activation function $f$ of each neural unit (e.g. substantially every neural unit in the neural network 202) may be such that, for all values of the corresponding argument $y$, the function has a non-zero derivatives with respect to the argument $y$. This typically means that the derivative of the function with respect to each of the parameters g, $\{w_j\}$ and $\beta$ is non-zero, e.g. except in the case that the parameter is multiplied by zero in the function, e.g. $w_j$ in the case that $x_j$ is zero. For example, none of the neural units in the neural network 202 may be chosen (as in some known neural networks used in reinforcement learning systems) to be a rectified linear unit (ReLu unit), which has an activation function $f(y) = \max(0, y)$, for which the derivative with respect to $y$ is zero for $y$ less than zero. Instead, the neural units may be leaky ReLu units (Mass A. L. et al., "Rectifier nonlinearities improve neural network acoustic models", 2013, in CML Workshop on Deep Learning for Audio, Speech and Language processing) which have a small slope for negative values. For example, the activation function may be defined as $f(y) = ay$ for $y$ less than zero, and $y$ for $y$ greater than zero, for $a$ less than one, such as $a$ less than 0.1.

In some implementations, the selection unit 203 selects the action for which the network output of the neural network 202 is highest.

In other implementations, the network output defines a likelihood distribution over actions in a set of possible actions (e.g. the set of all actions which the agent 104 can be controlled to perform, or a proper sub-set of those actions). In some of these implementations, the selection unit 203 selects the action 102 to be performed by the agent 104 by sampling an action from the set of possible actions based on the likelihood distribution. For example, the selection unit 203 may process the likelihood values defining the likelihood distribution by a soft-max function to determine a probability distribution over the set of possible actions. After determining a probability distribution over the set of possible actions, the selection unit may select the action 102 to be performed by the agent 104 by sampling an action from the set of possible actions in accordance with the probability distribution. As another example, the network output may include respective numerical values defining the parameters of a parametric probability distribution (e.g., the mean and standard deviation of a Normal distribution). In this example, the set of possible actions may be a continuous set (e.g., a continuous range of real numbers). The selection unit 201 may select the action 102 to be performed by the agent 104 by sampling an action from the set of possible actions based on the parametric probability distribution defined by the network output.

As noted above, the neural network 202 is defined by a plurality of model parameters (e.g. each activation function is defined by a respective subset of the model parameters, with the subsets typically not overlapping). The model parameters are iteratively varied during the training of the neural network 202. The system 100 maintains a model parameter database 212 specifying the current values $\theta$ of each model parameter of each neural unit of each layer of the neural network 202. The system 100 can maintain the database 212 in, for example, a physical data storage device or a logical data storage area. As described below, the model parameter database 212 may also store a "provisional value" for each of the model parameter, where the provisional values vary more slowly than the current values, e.g. are updated to be equal to the current values of the respective model parameters for only a subset of the updates to the current values.

The system 100 includes a training engine 204 that is configured to train the neural network 202 over multiple training iterations. The training engine 204 trains the neural network 202 by iteratively (i.e., at each training iteration) adjusting the current values $\theta$ of the model parameters stored in the model parameter database. By training the neural network 202, the training engine 204 may cause the neural network 202 to generate network outputs that result in a selection of actions 102 to be performed by the agent 104 which increase a cumulative measure of reward received by the system 100. By increasing the cumulative measure of reward received by the system 100 (e.g., a long-term time-discounted reward), the training engine 204 causes the agent 104 to perform a given task more effectively.

The training engine 204 trains the neural network 202 based on training data in the history database 112 including a set of multiple experience tuples. Each experience tuple includes data indicating: (i) an observation $S_t$, (ii) a corresponding action $A_t$ performed by the agent 104 in response to the observation $S_t$, (iii) a corresponding reward $R_{t+1}$ received in response to the agent performing the action $A_t$, and (iv) a next observation $S_{t+1}$ characterizing a state that the environment transitioned into as a result of the agent performing the action. The set of experience tuples may include online experience tuples, offline experience tuples, or both. An online experience tuple refers to an experience tuple where the action included in the experience tuple was selected based on a network output generated by the neural network 202 in accordance with the current values of the model parameters. Conversely, an offline experience tuple refers to an experience tuple where the action included in the experience tuple has not been selected based on a network output generated by the neural network 202 in accordance with the current values of the model parameters. For example, the action included in an offline experience tuple may have been selected based on a network output generated by the neural network 202 in accordance with previous values of the model parameters (i.e., values that have since been adjusted during training), or may have been acquired from another source, such as tuples created by a human user who controls the agent 104 to perform the task.

At each training iteration, the training engine 204 selects an experience tuple and obtains a training network input from the experience tuple. For example, when the neural network 202 is configured to receive a network input including an observation and an action, the training engine 204 may use the observation - action pair included in the experience tuple as the training network input.

Before explaining how the training engine 204 operates, a comparative example is explained. This is a known algorithm for training the neural network 202 termed "naive Q-learning with $\varepsilon$-greedy exploration". This is expressed below, as algorithm 1. The neural network 202, having model parameters denoted $\theta$, upon receiving a network input comprising an observation $s$ and an action $a$, performs the function denoted $q_\theta(s, a)$. The set of parameters $\theta$ of the neural network 202 may be considered a vector, and are initially selected at random from a distribution (e.g. a normal distribution with mean zero and standard deviation one). The algorithm has two processes. One process ("Acting") generates experience tuples using the current model parameters $\theta$ to populate the history database 112, while the other process ("Q-Learning Update of $\theta$") updates the current model parameters $\theta$. The two processes are both performed repeatedly and jointly, i.e. performances of the acting process are simultaneous with, or interleaved with, performances of the other process.

Algorithm 1: Naive O-Learning of the neural network $q_\theta(s, a)$ with $\varepsilon$-greedy exploration

Exploration Parameters: Epsilon-greedy $\varepsilon$.
Regular Parameters: Learning rate $\alpha$, discount $\gamma$.
Initialization: Vector $\theta$ is chosen at random.
Acting:

1: At each time $t$, with probability $1- \varepsilon$, select $A_t$ as the action $a$ which is *arg max$_a$ q$_\theta$(s, a)*, or otherwise select action $A_t$ randomly from the set of possible actions (e.g. according to a predetermined probability distribution over the actions). This process is carried out in successive time steps until a termination criterion (e.g. indicating that the task has been completed) is met.

2: Add resulting experience tuples of the resulting trajectory $\tau$ into history database 112.

Q-Learning Update to $\theta$:

1: Randomly sample one experience tuple from the history database 112, denoted by $S_t$, $A_t$, $R_{t+1}$, $S_{t+1}$

2: Let G = $R_{t+1} + \gamma\, max_a\, q_\theta(S_{t+1}, a)$

3: $\theta \leftarrow \theta - \alpha\nabla_\theta(G - q_\theta(S_t, A_t))^2$.

Thus, in the process "Q-Learning Update to $\theta$" a gradient is determined of a loss function that depends on the derivative of the difference between a target output G and a network output $q_\theta(S_t, A_t)$ with respect to the current values $\theta$ of the model parameters.

A rationale underlying implementations of the present disclosure is as follows. The agent control system 201 can be considered as selecting actions from a policy denoted $\pi$. The Monte-Carlo return for state $S_t$ is

$$Z_i = \sum_{i=0}^{\infty} \gamma^i R_{t+i+1}$$

. The expected return is called the value $v_\pi(s)$ defined as $\mathbb{E}_\pi[Z_i | S_t = s]$ . It is desirable to find a policy that selects actions to maximize the expected return. The function $q_\theta$ performed by the neural network 202 can be used to generate a parametric version of $v_\pi(s)$, which may be denoted $v_\theta(s)$. It is desirable to generate the neural network 202 in a way which is computationally efficient even if the neural network 202 is large, and which supports off-policy learning (i.e. without joint generation of new experience tuples), Q-learning and k-step temporal difference (TD) learning in which the neural network bootstraps on its own predictions - a requirement which differentiates reinforcement learning from supervised learning. These objectives are addressed by:

1. Using a suitable parametric density model $f_\theta$ to predict the distribution of returns: that is $f_\theta(Z|s)$.

2. Using $f_\theta$ to approximate the corresponding posterior of the parameters $P(\theta|\mathcal{D})$ .

3. To compute $P(v_\pi(s)|\mathcal{D})$ from $P(\theta|\mathcal{D})$ , so that it can be used for more sophisticated evaluation of the expected return than is obtained by relying on a single possible realization of the model parameters $\theta$, for use in a neural network training algorithm which is based on the value function.

Referring to step 1, some known training algorithms approximate Z using a k-step bootstrapped reward $G^k$ defined (taking the case of t=0 for simplicity) as $\sum_{i=1}^{k} \gamma^{i-1} R_i + \gamma^{k-1} V_k$ , where $V_k$ is the output of the model $v_\theta$ upon receiving the observation for k-th successive step. However, $P(Z|s)$ is not equal to $P(G^k|s)$, and the distribution of $G^k$ only captures the epistemic uncertainty of the first k-steps, not the epistemic uncertainty of the bootstrap value $v_\theta(s)$. A similar problem arises for some known algorithms which use a return $G^Q$ defined as $R_1 + \gamma max_a q_\theta(S_1, a)$.

To address this, it is proposed here to sample returns Z' from a distribution based on P(Z). This is referred to as making the agent "distributional". This can be done by selecting values $Z'_k$ from a distribution $f_\theta(Z|S_k)$, to evaluate Z' defined as $\sum_{i=1}^{k} \gamma^{i-1} R_i + \gamma^k Z'_k$ which has a distribution approximately the same as Z. Maximum likelihood values $\theta^{MLE}$ of the model parameters $\theta$ can then be evaluated, for example by gradient decent based on $\nabla_\theta log f_\theta(Z|S)$.

Step 2 involves using the Bernstein-von Mises theorem that the Bayesian posterior of a parametric density model $f_\theta(X)$ given a set of $n$ samples $\{X_i\}$ from a distribution $f_{\theta true}(X)$ defined by a set of unknown model parameters $\theta^{true}$ is given by:

$$P(\theta|\{X_i\}) = \mathcal{N}(\theta_n^{MLE}, \frac{1}{n} \mathcal{J}(\theta^{true})^{-1}) \qquad (1)$$

where $\mathcal{N}(a, b)$ denotes a normal distribution of a vector, with the mean values of the components of the vector being given by a vector $\boldsymbol{a}$ and a covariance matrix $\boldsymbol{b}$. $\mathcal{J}(\theta^{true})$ denotes a Fisher information matrix. Using the Fisher approximation, the Fisher information matrix can be approximated as:

$$\mathcal{J}(\theta^{true}) = \frac{1}{n}\sum_{i=1}^{n} \nabla_\theta \log f_{\theta^{true}}(X_i)\nabla_\theta \log f_{\theta^{true}}(X_i)^T.$$

Since $\theta^{true}$ is unknown, this in turn is approximated as

$$\hat{\mathcal{J}}(\theta^{MLE}) = \frac{1}{n}\sum_{i=1}^{n} \nabla_\theta \log f_{\theta^{MLE}}(X_i)\nabla_\theta \log f_{\theta^{MLE}}(X_i)^T. \qquad (2)$$

Thus, an approximation to the Fisher information matrix for the $\theta^{MLE}$ can be found using values from the database $\mathcal{D}$ as the $\{X_i\}$, resulting in the distribution $P(\theta|\mathcal{D})$. To reduce the memory requirements to implement this (which scale as the square of the number of model parameters), $\hat{\mathcal{J}}(\theta^{MLE})$ can be approximated and inverted by considering only its diagonal components, $f^{diagonal}$ (that is, $\hat{\mathcal{J}}^{diag}(\theta^{MLE})$), which can be shown to be an accurate approximation.

Step 3 can be performed by Thompson sampling from the posterior distribution $P(\theta|\mathcal{D})$. Note that although, as shown above, $P(\theta|\mathcal{D})$ has a convenient Gaussian shape, and, taking the diagonal approximation for the Fisher information matrix, the distributions for individual components can be considered as independent, nonlinearities in the model mean that $P(v_\pi(s)|\mathcal{D})$ does not have such a convenient form. However, repeatedly sampling values from $P(\theta|\mathcal{D})$ (here called "sampled parameter values"), allows $P(v_\theta(s)|\mathcal{D})$ to be evaluated, and used in the training algorithm.

Specific examples of this process will now be discussed, showing how the technique above can be implemented in a version of Q-learning. However, the present techniques are more general, and can be used in any reinforcement learning technique based on a value function.

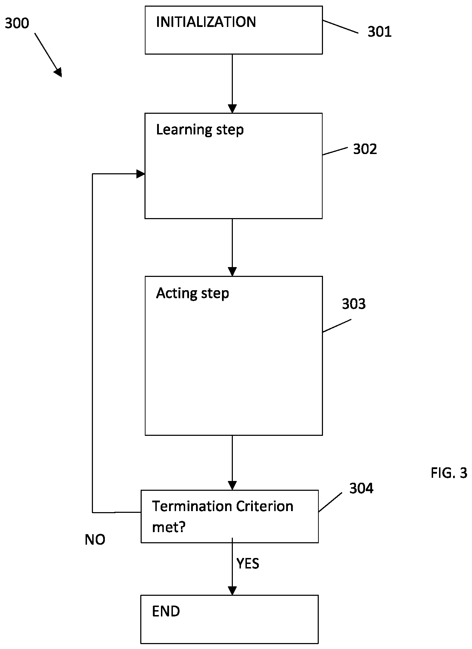

FIG. 3 is a flow diagram of an example process 300 for training a neural network by iterative adaptation of model parameters $\theta$ of a neural network which performs a function $q_\theta$ of a network input comprising an observation and an action. The process 300 can be performed by a system of one or more computers located in one or more locations. For example, the reinforcement learning system 100 of FIG. 2 can perform the process 300, and the explanation below assumes that this is the case.

The process 300 is based on a plurality of hyper-parameters. These include a number of parameters which define the exploration performed by the neural network: an exploration scale value $\omega$, a return variance value $\sigma^{Return2}$, a Fisher learning rate $\beta$, and Fisher regularization value $\varepsilon$. They further include additional hyper-parameters: a learning rate $\alpha$ and a discount value $\gamma$.

In an initialization step (301), initial values for the model parameters $\theta$ are selected, e.g. at random from a distribution (e.g. a normal distribution with mean zero and standard deviation one). Additionally, an integer parameter $n$ is defined which is initially zero. Additionally, a vector $f^{diagonal}$ is defined having the same number of components as the number of model parameters. The components of the vector $f^{diagonal}$ are referred to as respective knowledge parameters.

The process 300 makes use of a model parameter distribution which, for each model parameter, is a normal distribution centered on the current value of the model parameter, and with a standard deviation which is inversely related to the respective knowledge parameter (e.g. proportional to the respective knowledge parameter plus the Fisher regularization parameter, raised to the power of minus one half). This distribution iteratively approaches

$$\mathcal{N}(\theta^{MLE}, \frac{1}{n}\hat{\mathcal{J}}^{diag}(\theta^{MLE})).$$

Initially, the vector $f^{diagonal}$ may have all zero values. In the process 300, the vector $f^{diagonal}$ is iterated to become an improving estimate of the diagonal values of the Fischer information matrix which gives the posterior distribution of the model parameters.

Following the initialization, a learning step 302 is performed in alternation with an acting step 303. In the learning step 302, the posterior distribution of the model parameters $\theta$ is iteratively found. In the acting step 303, new experience tuples are generated and added to the history database 112. Steps 302, 303 are performed until it is determined that a termination criterion has been met (304), at which time the training procedure ends. In a variation of the method, the two steps 302, 304 may be performed simultaneously, i.e. with one or more instances of one of step 302 or step 303 being performed during a performance of the other of step 302 or step 303. In a further variation, optionally the acting step 303 may be omitted, i.e. the learning process is "offline", in the sense that no new experience tuples are generated and added to the history database 112.

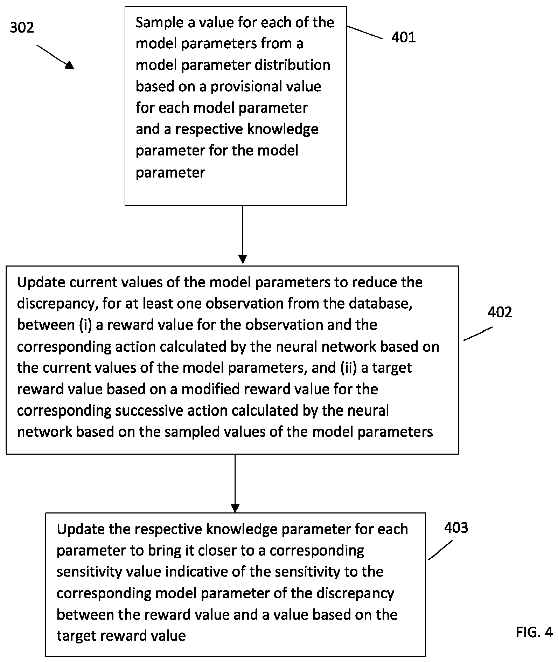

Learning step 302 is explained in more detail with reference to FIG. 4, which shows sub-steps of the learning step 302. During the learning step, the model parameters $\theta$ are iteratively changed. As well as storing current values of the model parameters $\theta$, the model parameter database 212 may optionally stores respective values $\overline{\theta}$ which evolve more slowly. In the case that two both the sets of values $\theta$ and $\overline{\theta}$ are used, the values $\overline{\theta}$ are referred to as provisional values for each model parameter. If not, the term "provisional values" is interchangeable with the term "current values" of the model parameters. In either case, the model parameter distribution may be a normal distribution for each model parameter centered on the respective provisional value, and with a standard deviation based on the respective one of the knowledge parameters $f^{diagonal}$.

In step 401 (referred to below as "Posterior sampling", and which is a Thompson sampling process), a sampled value $\theta'$ for each of the model parameters is sampled from the model parameter distribution.

In step 402 (referred to below as a Q-learning update with $\theta'$), for at least one of the experience tuples $S_t$, $A_t$, $R_{t+1}$, $S_{t+1}$ from the history database 112, the current values $\theta$ of the model parameters are updated to reduce the discrepancy (difference) between (i) a reward value $q_\theta(S_t, A_t)$ for the observation $S_t$ and the corresponding action $A_t$ calculated by the neural network 202 based on the current values $\theta$ of the model parameters, and (ii) a target reward value $G$ defined as $R_{t+1} + \gamma max_a q_\theta(S_{t+1}, a)$. Here $\gamma max_a q_\theta(S_t, a)$ is a modified reward value for the successive action $S_{t+1}$ calculated by the neural network 202 based on the sampled values $\theta'$ of the model parameters.

In step 403 (referred to below as a Fisher update), each of the knowledge parameters $f^{diagonal}$ is updated to bring it closer to a sensitivity value (in an example below denoted $g^{LogL} \odot g^{LogL}$ where the operator $\odot$ denotes component-wise multiplication) indicative of the sensitivity to the corresponding model parameter of the discrepancy between the reward value $q_\theta(S_t, A_t)$ and a value $Z'$ based on the target reward value $G$. The value $Z'$ may be the target reward value $G$ plus a term (below denoted $\gamma \eta'$) selected from a distribution, such as a normal distribution. Note that the value $Z'$ may also be considered as a target reward value, one which incorporates the distributional update.

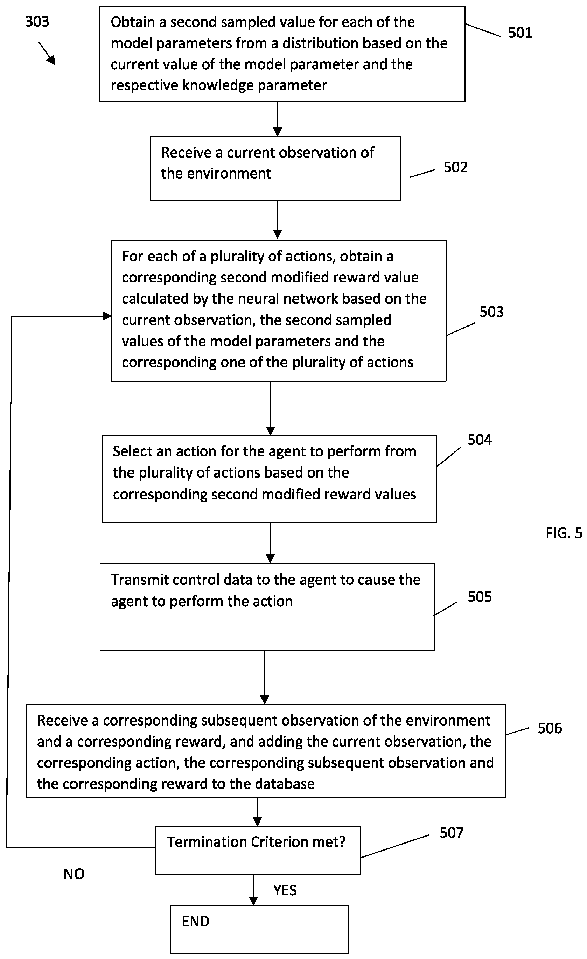

Acting step 303 is explained in more detail with reference to FIG. 5, which shows steps 501-507 which are sub-steps of the acting step 303. The set of steps 503-507 are performed repeatedly in a loop to generate successively a plurality of experience tuples forming a trajectory (an episode).

Like the first step 401 of the learning step 302, the first step 501 of the acting step 303 is Posterior sampling (Thompson sampling) from the model parameter distribution, to obtain a (second) sampled value $\theta'$ for each of the model parameters.

In step 502, a current observation s is received of the current state of the environment.

In step 503, for each of a plurality of actions $a$ (e.g. all the set of actions the agent might take), a corresponding (second) modified reward value $q_\theta(s, a)$ is calculated by the neural network 202 based on the current observation s, the (second) sampled values $\theta'$ of the model parameters and the corresponding one $a$ of the plurality of actions.

In step 504 an action is selected based on the corresponding modified reward values, such as the action for which $q_\theta(s, a)$ is the highest. Note that in contrast to the corresponding step of algorithm 1, there is no need for a "greedy" random choice to be made at this stage (as in Algorithm 1), because exploration occurs naturally due to the distributional choice for the (second) sampled values of the model parameters.

In step 505, control data is transmitted to the agent 104 to cause the agent 104 to perform the selected action.

In step 506, an observation of the state of the environment at the next time step is received, and also a corresponding reward (e.g. from the reward calculation unit 109, based on the state of the environment at the next time step). The current observation s, and corresponding action $a$, the corresponding subsequent observation and the corresponding reward are then added to the history database 112.

In step 507, it is then determined whether a termination criterion has been met (e.g. whether a certain task has been accomplished by the agent, and/or whether a certain number of time steps have passed). If so, the step 303 terminates. If not, the process returns to step 503, using the observation received in step 506 as the current observation. In this way, an episode is performed at successive time steps to generate a trajectory $\tau$ which is added to the history database 112.

A first specific algorithm according to FIGS. 3-5 is given below as Algorithm 2. A second specific algorithm according to FIGS. 3-5 is given below as Algorithm 3.

Algorithm 2: Epistemic Q-Learning of the neural network $q_\theta(s, a)$ with diagonal Fisher approximation

Exploration Parameters: an exploration scale value $\omega$, a return variance value $\sigma^{Return2}$, a Fisher learning rate $\beta$, and Fisher regularization value $\varepsilon$.

Additional hyper-parameters: a learning rate $\alpha$ and a discount value $\gamma$.

Initialization: All components of a vector $\theta$ are chosen at random, and corresponding components of a vector $f^{diagonal}$ are set to zero. Scalar $n$ is set to zero.

Acting step:

1: Sample $\theta$ from the posterior distribution (using the sub-routine "Posterior sampling" below).

2. At each of a sequence of times $t$, select a corresponding action $a_t$ as the action $a$ which is $arg\ max_a\ q_\theta(s, a)$. This process is carried out in successive time steps until a termination criterion (e.g. indicating that the task is completed, or a certain number of time steps have occurred). This is referred to as a trajectory (episode).

3: Add resulting experience tuples of the trajectory $\tau$ into history database 112.

4: Set $n$ as $n + |\tau|$, where $|\tau|$ denotes the number of experience tuples of the trajectory $\tau$, so that $n$ indicates the total number of tuples.

Learning step:

1: Sample $\theta$ from the posterior distribution (using the sub-routine "Posterior sampling" below).

2: Q-Learning Update with $\theta$:

3: Randomly sample one experience tuple from the history database 112, denoted by $S_t, A_t, R_{t+1}, S_{t+1}$

4: Let $G = R_{t+1} + \gamma\ max_a\ q_\theta(S_{t+1}, a)$

5: $\theta \leftarrow \theta - \alpha \nabla_\theta (G - q_\theta(S_t, A_t))^2$.

6: Fisher update

7: Sample $\eta'$ from the normal distribution $\mathcal{N}(0, \sigma^{return})$

8: Set $Z'$ as $G + \gamma \eta'$

9: Set $g^{LogL}$ as $\nabla_\theta(Z' - q_\theta(S_t, A_t))^2$

10: $f^{diagonal} \leftarrow (1 - \beta)f^{diagonal} - \beta g^{LogL} \odot g^{LogL}$.

Posterior sampling

1: Define the vector $\sigma$ (having a number of components equal to the number of model parameters; these components are labelled using an integer index i) such that $\sigma_i = \dfrac{1}{\sqrt{(f^{diagonal})_i + \epsilon}}$

2 Sample corresponding components $z_i$ of a vector $z$ from normal distribution $\mathcal{N}(0,1)$

3 Return $\theta'$ as $\theta + \dfrac{1}{\sqrt{n\omega}} \sigma \odot z$

Typically, the learning step is carried out as often, or more often, than the acting step, and the learning step may be performed in a batched way, using multiple experience tuples at once. The inclusion of the inverse dependence on $n$ in the third step of the posterior sampling is motivated by considering that the knowledge depends upon the number of unique experience tuples which the learning step has processed (even if it has processed some experience tuples multiple times). The choice of the function $\dfrac{1}{\sqrt{n\omega}}$ is not critical, and other slowly decreasing functions of $n$ would also work. Some other choices can be compensated for by varying the hyper-parameters.

Note that Algorithm 2 can be revised to be an offline process by omitting the acting step and relying on a pre-existing database of experience tuples. In this case, $n$ could be set as the total number of tuples in the database.

The choice of the definition of $g^{LogL}$ is motivated by the observation that, referring to Eqn. (2), a Monte Carlo sampling from $f_{\theta MLE}$ simplifies to $Z' = q_{\theta MLE}(S_t, A_t) + \eta'$ where $\eta'$ is sampled from $\mathcal{N}(0,1)$, and $\nabla_\theta \log f_\theta(Z'|S_t, A_t) = \nabla_\theta(Z'$

$- q_\theta(S_t, A_t))^2.$

Note that in principle, it would be possible, rather than evaluating $g^{LogL} \odot g^{LogL}$ for samples $Z'$ based on the random variable $\eta'$ as in Algorithm 2 (which is referred to here as a "distributional update"), to calculate the expected gradient $g^{MLE}$ based on the current $\theta$, and use $g^{MLE} \odot g^{MLE}$ in place of $g^{LogL} \odot g^{LogL}$. However, this can be shown theoretically not to be justified to obtain the expectation value of the right-hand side of Eqn. (2). Doing this is referred to below as having "no distributional update" of the knowledge parameters.

One difference between Algorithm 2 and Algorithm 1 is the Thompson sampling used in Algorithm 2 in the acting step ("TS acting"). Another difference is the Thompson sampling used in Algorithm 2 in the learning step ("TS bootstrapping").

Algorithm 3 is a variation of Algorithm 2 for the case that the model parameter database 212 stores both current values $\theta$ for the model parameters and provisional values $\overline{\theta}$ for the model values, which are updated more slowly (e.g. only periodically).

Algorithm 3: Epistemic Q-Learning of the neural network $q_\theta(s, a)$ with diagonal Fisher approximation using provisional model values

Exploration Parameters: an exploration scale value $\omega$, a return variance value $\sigma^{Return2}$, a Fisher learning rate $\beta$, Fisher regularization value $\varepsilon$ They further include additional hyper-parameters: a learning rate $\alpha$, a discount value $\gamma$, and target network period $K_{target}$.

Initialization: The two vectors $\theta$ and $\overline{\theta}$ have respective components for the model parameters. All components of $\theta$ and $\overline{\theta}$ are initially chosen at random, and corresponding components of a vector $f^{diagonal}$ are set to zero. Scalar $n$ is set to zero.

Acting step:

   1: Sample $\theta$ from the posterior distribution (using the sub-routine "Posterior sampling" below).
   2. At each of a sequence of times $t$, select a corresponding action $a_t$ as the action $a$ which is $arg\ max_a\ q_\theta(s, a)$. This process is carried out in successive time steps until a termination criterion (e.g. indicating that the task is completed, or a certain number of time steps have occurred).
   3: Add resulting experience tuples of the resulting trajectory $\tau$ into history database 112.
   4: Set $n$ as $n + |\tau|$, where $|\tau|$ denotes the number of experience tuples of the trajectory $\tau$, so that $n$ indicates the total number of tuples

Learning step:

   1: Sample $\theta$ from the posterior distribution (using the sub-routine "Posterior sampling" below).
   2: Q-Learning Update with $\theta$:
   3: Randomly sample one experience tuple from the history database 112, denoted by $S_t, A_t, R_{t+1}, S_{t+1}$
   4: Let $G = R_{t+1} + \gamma\ max_a\ q_\theta(S_{t+1}, a)$
   5: $\theta \leftarrow \theta - \alpha \nabla_\theta (G - q_\theta(S_t, A_t))^2.$
   6: Fisher update

   7: Sample $\eta'$ from the normal distribution $\mathcal{N}(0, \sigma^{return})$
   8: Set $Z'$ as $G + \gamma\ \eta'$
   9: Set $g^{LogL}$ as $\nabla_\theta (Z' - q_\theta(S_t, A_t))^2$
   10: $f^{diagonal} \leftarrow (1 - \beta)f^{diagonal} - \beta g^{Log} \odot g^{LogL}$
   11: Every $K_{target}$ steps set $\overline{\theta}$ equal to $\theta$

Posterior sampling

   1: Define the vector $\sigma$ (having a number of components equal to the number of model parameters; these components are labelled using an integer index $i$) such that $\sigma_i = \dfrac{1}{\sqrt{(f^{diagonal})_i + \epsilon}}$

   2 Sample corresponding components $z_i$ of a vector $z$ from normal distribution $\mathcal{N}(0,1)$

$$3 \text{ Return } \theta' \text{ as} \quad \bar{\theta} \;+\; \frac{1}{\sqrt{n\omega}}\,\sigma \odot z$$

Many variations of Algorithms 2 and 3 are possible. For example, in some of these an integer number $K_{burnin}$ of episodes are collected by a conventional acting step (e.g. as used in Algorithm 1) before beginning the selection of sampled parameter values by posterior sampling. This means that a certain number of informative episodes are collected even when the current values for the model parameters are far from the values they are eventually iterated towards.

In another variation, the updating of the current values $\theta$ can be based on a more sophisticated method than simply setting them at step 5 by an amount proportional to $\nabla_\theta (G - q_\theta(S_t, A_t))^2$ (gradient descent). For example, the vector $\nabla_\theta (G - q_\theta(S_t, A_t))^2$ can be input to an algorithm such as ADAM ("Adam: a method for stochastic optimization", D. Kingma et al., 2014), and used to produce a different output amount by which $\theta$ is updated.

In another variation, the definition of $\sigma_i$ used in the posterior sampling may be changed to be $\quad \sigma_i = \dfrac{1}{\sqrt{(f^{unbiased})_i + \epsilon}}$ where $f^{unbiased}$ is equal to $f^{diagonal}/m$ where is a scalar value which begins small and is incrementally adapted towards $1/\beta$. In this variation, $g^{LogL} \odot g^{LogL}$ may not be multiplied by $\beta$ in the learning step.

In all these examples, the reinforcement learning system 100 drives exploration during the training by selecting actions 102 to be performed by the agent 104 based on network outputs generated by the neural network 202 in accordance with the posterior distribution of the model parameters based on the current values of the model parameters. During the exploration, the system 100 selects actions 102 to be performed by the agent 104 which are different from the actions that would be selected based on network outputs generated by the neural network 202 only based on the current values of the model parameters of the neural network 202.

By exploring, the system 100 can learn more about the environment 106 and thereby potentially learn to select actions 102 that cause the agent 104 to accomplish tasks more effectively. More specifically, by exploring, the system 100 can generate experience tuples which may represent previously unknown information about the environment 106. The training engine 204 can train the neural network 202 using these experience tuples, thereby enabling the neural network 202 to exploit the previously unknown information about the environment 106 to generate network outputs that result in the agent 104 performing actions 102 that accomplish tasks more effectively.

By adjusting the current values of the knowledge parameters at each iteration of the learning step 302, the training engine 204 adaptively adjusts the amount of exploration performed. For example, as the system 100 learns more about the environment 106, the training engine 204 can adjust the current values of the knowledge parameters to reduce the amount of exploration performed.

Once the training of the model parameters has been completed (i.e. after the termination criterion has been met in step 304 of FIG. 3), the knowledge parameters may be discarded, and the system of FIG. 2 can be used based on the trained values of the model parameters stored in the model parameter database 212 to control the agent in further episodes to perform the task. Optionally, the knowledge parameters may be retained, however, such that the further performances of the task are performed in the same way as in the acting steps of Algorithms 2 and 3.

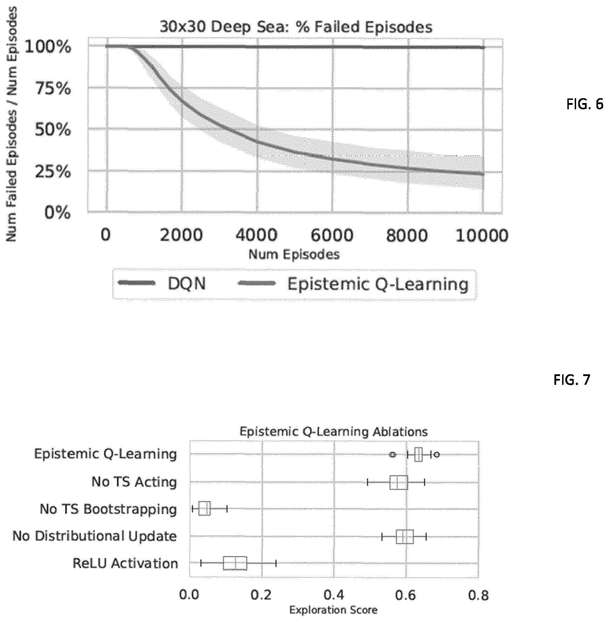

Experiments were carried out comparing the performance of an example of the current disclosure using Algorithm 2 (Epistemic Q-learning) and the DQN (Deep Q-Networks) algorithm with $\varepsilon$-greedy exploration which is part of BSuite, to perform the Deep Sea (30x30) exploration benchmark (Osmand, I, et al, "Randomized Prior Functions for Deep Reinforcement Learning", 2018). In this problem an agent moves in *an LxL* square grid starting from a top-left corner by *L* successive movements which are diagonally down-and-right or down-and-left. A reward is given only if all *Z* steps are down-and-right, so the reward is very sparse. The results for *L*=30 are shown in FIG. 6. As shown, DQN fails to solve the problem, whereas with Epistemic Q-learning the total number of unsuccessful episodes gradually decreases to a level of about 25%.

The experiments were carried out using a neural network 202 in which each neural unit had a Leaky-ReLU activation function, for which the activation functions have a non-zero gradient for almost all values of their argument (e.g. $f(y) = \max(ay, y)$, where a is a (small) positive value less than one, such as 0.05) and 10 small batches of size 12.

Investigations were also carried out of the effects of omitting various aspects of Algorithm 2. FIG. 7 compares the range of the exploration score of Epistemic Q-learning over 30 seeds, to four "ablations" in which four respective aspects of Algorithm 2 (TS acting; TS bootstrapping; distributional updates; and the Leaky ReLU activation) are omitted, while keeping the corresponding other aspects the same.

Removing TS acting (i.e. the use of posterior sampling during the acting step) had a noticeable but not dramatic effect on the performance.

By contrast, omitting TS bootstrapping (replacing it with a distributional update with the Q-function at $\theta^{MLE}$ by setting $Z' = R_{t+1} + \gamma \max_a q_{\theta MLE}(S_{t+1}, a)\ G + \gamma\,\eta'$, i.e. not using a sample from the posterior distribution for $\theta$ but only the

maximum of that distribution), gave a large drop in performance.

The distributional update (i.e. the use of $\gamma\eta'$) impacts the Fisher computation via its gradient $g_t^{logL}$. Replacing the distributional update with a conventional Q-learning update $g_t^{MLE}$, produced a smaller, but significant, drop in performance.

Using ReLU activations rather than leaky ReLU activations also produced a large drop in performance. It is believed that this is due to interaction between the posterior estimation and the zero gradient which ReLU exhibits on all negative input values.

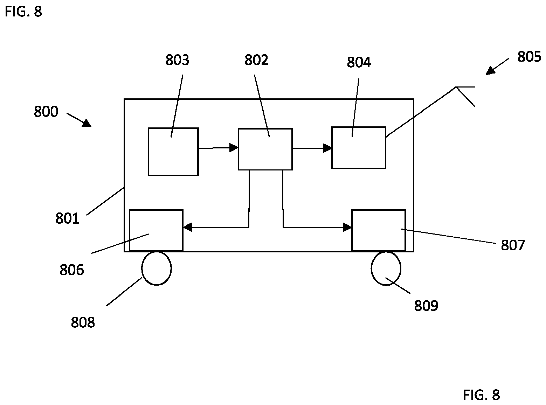

FIG. 8 shows a robot 800 having a housing 801. The robot includes, e.g. within the housing 801 (or, in a variation, outside the robot 800 but connected to it over a communications network), a control system 802 which comprises a neural network defined by a plurality of model parameters for each of one or more tasks which the robot is configured to perform. The control system 802 may be the trained agent control system 201 of FIG. 2. The control system 802 has access for a corresponding database of model parameters for each given task, which may have been obtained for that task by the method of FIG. 3.

The robot 800 further includes one or more sensors 803 which may comprise one or more (still or video) cameras. The sensors 803 capture observations (e.g. images) of an environment of the robot 800, such as room in which the robot 800 is located (e.g. a room of an apartment). The robot may also comprise a user interface (not shown) such as microphone for receiving user commands to define a task which the robot is to perform. Based on the task, the control system 802 may read the corresponding model parameters and configure the neural network 202 based on those model parameters. Note that, in a variation, the input from the user interface may be considered as part of the observations. There is only a single task in this case, and processing the user input is one aspect of that task.

Based on the observations captured by the sensors 803, control system 802 generates control data for an actuator 804 which controls at least one manipulation tool 805 of the robot, and control data for controlling drive system(s) 806, 807 which e.g. turn wheels 808, 809 of the robot, causing the robot 800 to move through the environment according to the control data. Thus, the control system 802 can control the manipulation tool(s) 805 and the movement of the robot 800 within the environment.

This specification uses the term "configured" in connection with systems and computer program components. For a system of one or more computers to be configured to perform particular operations or actions means that the system has installed on it software, firmware, hardware, or a combination of them that in operation cause the system to perform the operations or actions. For one or more computer programs to be configured to perform particular operations or actions means that the one or more programs include instructions that, when executed by data processing apparatus, cause the apparatus to perform the operations or actions.

Embodiments of the subject matter and the functional operations described in this specification can be implemented in digital electronic circuitry, in tangibly-embodied computer software or firmware, in computer hardware, including the structures disclosed in this specification and their structural equivalents, or in combinations of one or more of them. Embodiments of the subject matter described in this specification can be implemented as one or more computer programs, i.e., one or more modules of computer program instructions encoded on a tangible non-transitory storage medium for execution by, or to control the operation of, data processing apparatus. The computer storage medium can be a machine-readable storage device, a machine-readable storage substrate, a random or serial access memory device, or a combination of one or more of them. Alternatively or in addition, the program instructions can be encoded on an artificially-generated propagated signal, e.g., a machine-generated electrical, optical, or electromagnetic signal, that is generated to encode information for transmission to suitable receiver apparatus for execution by a data processing apparatus.

The term "data processing apparatus" refers to data processing hardware and encompasses all kinds of apparatus, devices, and machines for processing data, including by way of example a programmable processor, a computer, or multiple processors or computers. The apparatus can also be, or further include, special purpose logic circuitry, e.g., an FPGA (field programmable gate array) or an ASIC (application-specific integrated circuit). The apparatus can optionally include, in addition to hardware, code that creates an execution environment for computer programs, e.g., code that constitutes processor firmware, a protocol stack, a database management system, an operating system, or a combination of one or more of them.

A computer program, which may also be referred to or described as a program, software, a software application, an app, a module, a software module, a script, or code, can be written in any form of programming language, including compiled or interpreted languages, or declarative or procedural languages; and it can be deployed in any form, including as a stand-alone program or as a module, component, subroutine, or other unit suitable for use in a computing environment. A program may, but need not, correspond to a file in a file system. A program can be stored in a portion of a file that holds other programs or data, e.g., one or more scripts stored in a markup language document, in a single file dedicated to the program in question, or in multiple coordinated files, e.g., files that store one or more modules, sub-programs, or portions of code. A computer program can be deployed to be executed on one computer or on multiple computers that are located at one site or distributed across multiple sites and interconnected by a data communication network.

In this specification the term "engine" is used broadly to refer to a software-based system, subsystem, or process that is programmed to perform one or more specific functions. Generally, an engine will be implemented as one or more software modules or components, installed on one or more computers in one or more locations. In some cases, one or more computers will be dedicated to a particular engine; in other cases, multiple engines can be installed and running on the same computer or computers.

The processes and logic flows described in this specification can be performed by one or more programmable computers executing one or more computer programs to perform functions by operating on input data and generating output. The processes and logic flows can also be performed by special purpose logic circuitry, e.g., an FPGA or an ASIC, or by a combination of special purpose logic circuitry and one or more programmed computers.

Computers suitable for the execution of a computer program can be based on general or special purpose microprocessors or both, or any other kind of central processing unit. Generally, a central processing unit will receive instructions and data from a read-only memory or a random access memory or both. The essential elements of a computer are a central processing unit for performing or executing instructions and one or more memory devices for storing instructions and data. The central processing unit and the memory can be supplemented by, or incorporated in, special purpose logic circuitry. Generally, a computer will also include, or be operatively coupled to receive data from or transfer data to, or both, one or more mass storage devices for storing data, e.g., magnetic, magneto-optical disks, or optical disks. However, a computer need not have such devices. Moreover, a computer can be embedded in another device, e.g., a mobile telephone, a personal digital assistant (PDA), a mobile audio or video player, a game console, a Global Positioning System (GPS) receiver, or a portable storage device, e.g., a universal serial bus (USB) flash drive, to name just a few.

Computer-readable media suitable for storing computer program instructions and data include all forms of non-volatile memory, media and memory devices, including by way of example semiconductor memory devices, e.g., EPROM, EEPROM, and flash memory devices; magnetic disks, e.g., internal hard disks or removable disks; magneto-optical disks; and CD-ROM and DVD-ROM disks.

To provide for interaction with a user, embodiments of the subject matter described in this specification can be implemented on a computer having a display device, e.g., a CRT (cathode ray tube) or LCD (liquid crystal display) monitor, for displaying information to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's device in response to requests received from the web browser. Also, a computer can interact with a user by sending text messages or other forms of message to a personal device, e.g., a smartphone that is running a messaging application, and receiving responsive messages from the user in return.

Data processing apparatus for implementing machine learning models can also include, for example, special-purpose hardware accelerator units for processing common and compute-intensive parts of machine learning training or production, i.e., inference, workloads.

Machine learning models can be implemented and deployed using a machine learning framework, e.g., a TensorFlow framework, a Microsoft Cognitive Toolkit framework, an Apache Singa framework, or an Apache MXNet framework.

Embodiments of the subject matter described in this specification can be implemented in a computing system that includes a back-end component, e.g., as a data server, or that includes a middleware component, e.g., an application server, or that includes a front-end component, e.g., a client computer having a graphical user interface, a web browser, or an app through which a user can interact with an implementation of the subject matter described in this specification, or any combination of one or more such back-end, middleware, or front-end components. The components of the system can be interconnected by any form or medium of digital data communication, e.g., a communication network. Examples of communication networks include a local area network (LAN) and a wide area network (WAN), e.g., the Internet.

The computing system can include clients and servers. A client and server are generally remote from each other and typically interact through a communication network. The relationship of client and server arises by virtue of computer programs running on the respective computers and having a client-server relationship to each other. In some embodiments, a server transmits data, e.g., an HTML page, to a user device, e.g., for purposes of displaying data to and receiving user input from a user interacting with the device, which acts as a client. Data generated at the user device, e.g., a result of the user interaction, can be received at the server from the device.

While this specification contains many specific implementation details, these should not be construed as limitations on the scope of any invention or on the scope of what may be claimed, but rather as descriptions of features that may be specific to particular embodiments of particular inventions. Certain features that are described in this specification in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially be claimed as such, one or more features from a claimed combination can in some cases be excised from the combination, and the claimed combination may be directed to a subcombination or variation of a subcombination.

Similarly, while operations are depicted in the drawings and recited in the claims in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system modules and components in the embodiments described above should not be understood as requiring such separation in all embodiments, and it should be understood that the described program components and systems can generally be integrated together in a single software product or packaged into multiple software products.

Particular embodiments of the subject matter have been described. Other embodiments are within the scope of the following claims. For example, the actions recited in the claims can be performed in a different order and still achieve desirable results. As one example, the processes depicted in the accompanying figures do not necessarily require the particular order shown, or sequential order, to achieve desirable results. In some cases, multitasking and parallel processing may be advantageous.

**Claims**

1. A computer-implemented method for training a neural network of an agent control system for controlling an agent to perform a task in an environment, the neural network being configured to receive an input characterizing the state of the environment and to generate an output, the control system being configured to select an action for the agent to perform based on the output of the neural network;

   the method employing a database of observations of the state of the environment, corresponding actions performed by the agent when the environment was in that state, corresponding successive observation of corresponding successive states of the environment, and corresponding rewards associated with the actions and indicative of the contribution of the action to performing the task, the neural network being based on a plurality of model parameters of the neural network and is configured, upon receiving an observation and an action, to generate a reward value,
   the method including repeatedly updating current values of a plurality of the model parameters by:

   sampling a sampled value for each of the model parameters from a model parameter distribution based on a provisional value for each model parameter and a respective knowledge parameter for the model parameter;
   updating current values of the model parameters to reduce the discrepancy, for at least one observation from the database, between (i) a reward value for the observation and the corresponding action calculated by the neural network based on the current values of the model parameters, and (ii) a target reward value based on a modified reward value for the corresponding successive action calculated by the neural network based on the sampled values of the model parameters.

2. A computer-implemented method according to claim 1 in which the provisional value of each model parameter is the current value of the model parameter.

3. A computer-implemented method according to claim 1 comprises, following a plurality of said updates to the current values of the model parameters, a step of updating the provisional value of each model parameters to be the current value of the model parameter.

4. A computer-implemented method according to any of claims 1 to 3 further including:
   updating the respective knowledge parameter for each parameter to bring it closer to a corresponding sensitivity value indicative of the sensitivity to the corresponding model parameter of the discrepancy between the reward value and a value based on the target reward value.

**5.** A computer-implemented method according to claim 4 in which the sensitivity value is an increasing function of the magnitude of the corresponding component of the gradient of the discrepancy with respect to the values of the parameters.

**6.** A computer-implemented method according to claim 5 in which the sensitivity value is proportional to the square of the corresponding component of the gradient of the discrepancy with respect to the values of the parameters.

**7.** A computer-implemented method according to any of claims 4 to 6, in which the value based on the target reward value further includes a term selected from a distribution.

**8.** A computer-implemented method according to any preceding claim in which the sampled value for each model parameter is selected from a distribution centered on the respective provisional value of the model parameters and having a standard deviation which is inversely related to the respective knowledge parameter.

**9.** A computer-implemented method according to any preceding claim in which the target reward value includes a term which is a sum of the reward associated with the action and a future reward term proportional to an output of the neural network for the sampled values of the model parameters and the subsequent observation.

**10.** A computer-implemented method according to claim 9 in which the future reward term is proportional to the maximum, over a set of possible actions, of the respective reward value output by the neural network for the sampled values of the model parameters, upon receiving the subsequent observation and the possible action.

**11.** A computer-implemented method according to any preceding claim in which the neural network is composed of a sequence of layers, each layer being composed of a plurality of neural units, and outputs of the neural units in each layer of the sequence, except the last layer of the sequence, being inputs to the neural units of the successive layer of the sequence, the output of each neural unit being a non-linear function of an argument based on corresponding ones of the parameters and the inputs to the neural unit, the derivative of the functions with respect to the argument being non-zero.

**12.** A computer-implemented method according to any preceding claim, further including supplementing the database by, in each of a plurality of iterations:
receiving a current observation of the environment, selecting a corresponding action for the agent to perform using the neural network, transmitting control data to the agent to cause the agent to perform the action, receiving a corresponding subsequent observation of the environment and a corresponding reward, and adding the current observation, the corresponding action, the corresponding subsequent observation and the corresponding reward to the database.

**13.** A computer-implemented method according to claim 12 further comprising obtaining a second sampled value for each of the model parameters from a distribution based on the provisional value of the model parameter and the respective knowledge parameter,
and, in each of said plurality of iterations, said selecting the action for the agent to perform comprises:

for each of a plurality of actions, obtaining a corresponding second modified reward value calculated by the neural network based on the current observation, the second sampled values of the model parameters and the corresponding one of the plurality of actions; and
selecting the action for the agent to perform from the plurality of actions based on the corresponding second modified reward values.

**14.** A computer-implemented method of controlling an agent to perform a task in an environment, the method comprising repeatedly:

receiving an observation of a state of the environment,
for each of a plurality of actions, obtaining a corresponding reward value calculated based on the observation by a neural network trained by a method according to any preceding claim;
selecting an action for the agent to perform from the plurality of actions based on the corresponding reward values; and
transmitting control data to the agent to cause the agent to perform the action.

**15.** A computer-implemented method according to any preceding claim in which the environment is a real-world environment, the observations are collected by sensors arrange to observe the real-world environment, and the agent is an electromechanical agent arranged to move in the environment.

**16.** A computer-implemented method according to any preceding claim in which the agent is a real-world apparatus, the agent control system being a component of the apparatus and the actions varying control parameters of the apparatus.

**17.** A computer-implemented method according to claim 14 in which the neural network was trained using a simulated agent in a simulated environment, and said control data is transmitted to an agent which is a real-world apparatus in a real-world environment.

**18.** The method of any one of claims 12-14, wherein the agent comprises a user of a digital assistant, the method comprising:

obtaining information defining the task from the digital assistant; and
using the digital assistant to instruct the user to perform the actions.

**19.** The method of claim 18, further comprising

capturing, using the digital assistant, visual or audio observations of the user performing the actions; and
determining whether the user has successfully achieved the task.

**20.** The method of any of claims 1-17 in which the environment comprises a human user, the agent is an item of user equipment providing a user interface between the user and a computer system, and the agent is controlled by the action control system to perform an information transfer task in relation to the user using the user interface.

**21.** A system comprising one or more computers and one or more storage devices storing instructions that when executed by the one or more computers cause the one or more computers to perform the operations of the respective method of any one of claims 1-20.

**22.** One or more computer storage media storing instructions that when executed by one or more computers cause the one or more computers to perform the operations of the respective method of any one of claims 1-20.

REINFORCEMENT LEARNING
SYSTEM 100

ACTION 102

AGENT 104

ENVIRONMENT
106

OBSERVATION

108

REWARD
CALCULATION
UNIT 109

REWARD

110

HISTORY
DATABASE

112

FIG. 1

FIG. 2

FIG. 3

302

Sample a value for each of the
model parameters from a
model parameter distribution
based on a provisional value
for each model parameter
and a respective knowledge
parameter for the model
parameter

401

Update current values of the model parameters to reduce the
discrepancy, for at least one observation from the database,
between (i) a reward value for the observation and the
corresponding action calculated by the neural network based on
the current values of the model parameters, and (ii) a target
reward value based on a modified reward value for the
corresponding successive action calculated by the neural
network based on the sampled values of the model parameters

402

Update the respective knowledge parameter for each
parameter to bring it closer to a corresponding
sensitivity value indicative of the sensitivity to the
corresponding model parameter of the discrepancy
between the reward value and a value based on the
target reward value

403

FIG. 4

303

| Obtain a second sampled value for each of the model parameters from a distribution based on the current value of the model parameter and the respective knowledge parameter | 501 |

| Receive a current observation of the environment | 502 |

| For each of a plurality of actions, obtain a corresponding second modified reward value calculated by the neural network based on the current observation, the second sampled values of the model parameters and the corresponding one of the plurality of actions | 503 |

| Select an action for the agent to perform from the plurality of actions based on the corresponding second modified reward values | 504 |

| Transmit control data to the agent to cause the agent to perform the action | 505 |

| Receive a corresponding subsequent observation of the environment and a corresponding reward, and adding the current observation, the corresponding action, the corresponding subsequent observation and the corresponding reward to the database | 506 |

Termination Criterion met? — 507

NO

YES

END

FIG. 5

FIG. 6

FIG. 7

FIG. 8

FIG. 8

# EUROPEAN SEARCH REPORT

**Application Number**

EP 23 15 0615

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | AZIZZADENESHELI KAMYAR ET AL: "Efficient Exploration Through Bayesian Deep Q-Networks", 2018 INFORMATION THEORY AND APPLICATIONS WORKSHOP (ITA), IEEE, 11 February 2018 (2018-02-11), pages 1-9, XP033425583, DOI: 10.1109/ITA.2018.8503252 [retrieved on 2018-10-23] * abstract; figure 4 * * section VI, lines 1-2 * * section VI, lines 1-31 * * section V, lines 12-25 * * algorithm 1, steps 11-12 * * section V, lines 20-23 * * section V, lines 41-43 * * section V, lines 73-74 * * algorithm 1, steps 9-14 * * algorithm 1 step 3 * * algorithm 1, step 16 * * algorithm 1, step 7 * * section V, lines 32-35 * * equations (5), (8) * * section V, line 59 * * section V, lines 74-77 * * page 4, column 2, line 5 – line 6 * * section V, lines 85-86 * * section V, lines 2-11 * ----- -/-- | 1-22 | INV. G06N3/092 G06N3/084 ADD. G06N3/048 |

**TECHNICAL FIELDS SEARCHED (IPC)**

G06N

The present search report has been drawn up for all claims

| Place of search | Date of completion of the search | Examiner |
|---|---|---|
| The Hague | 29 June 2023 | Aoun, Marc |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

**Application Number**

**EP 23 15 0615**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ZACHARY C LIPTON ET AL: "BBQ-Networks: Efficient Exploration in Deep Reinforcement Learning for Task-Oriented Dialogue Systems", ARXIV.ORG, CORNELL UNIVERSITY LIBRARY, 201 OLIN LIBRARY CORNELL UNIVERSITY ITHACA, NY 14853, 17 August 2016 (2016-08-17), XP081349893, * abstract; figure 1 * * page 1, column 2, line 40 - line 42 * * page 2, column 2, line 16 - line 36 * * page 4, column 1, line 1 - line 46 * * page 3, column 1, line 34 - line 35 * * page 3, column 2, line 10 - line 21 * * page 2, column 1, line 6 - line 9 * * page 3, column 1, line 23 - line 25 * * page 3, column 1, line 40 - line 43 * * page 2, column 2, line 33 - page 3, column 1, line 10 * * page 3, column 1, line 1 - line 10 * * page 2, column 2, line 3 - line 8 * * page 2, column 1, line 31 - line 37 * * page 2, column 2, line 50 - line 57 * * page 5, column 2, line 1 - line 3 * * page 1, column 1, line 40 - page 2, column 1, line 21 * ----- | 1-22 | |
| X | GUODONG ZHANG ET AL: "Noisy Natural Gradient as Variational Inference", ARXIV.ORG, CORNELL UNIVERSITY LIBRARY, 201 OLIN LIBRARY CORNELL UNIVERSITY ITHACA, NY 14853, 6 December 2017 (2017-12-06), XP081320123, * section 5.4 * * Appendix C.4. * * algorithm 1 * * equation (14) * ----- -/-- | 1-22 | TECHNICAL FIELDS SEARCHED (IPC) |

The present search report has been drawn up for all claims

| Place of search | Date of completion of the search | Examiner |
|---|---|---|
| The Hague | 29 June 2023 | Aoun, Marc |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

## EUROPEAN SEARCH REPORT

Application Number

EP 23 15 0615

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | Rein Houthooft ET AL: "VIME: Variational Information Maximizing Exploration", , 23 November 2016 (2016-11-23), XP055446356, Retrieved from the Internet: URL:https://arxiv.org/pdf/1605.09674v3.pdf [retrieved on 2018-01-31] * algorithm 1 * ----- | 1-22 | |

TECHNICAL FIELDS
SEARCHED      (IPC)

The present search report has been drawn up for all claims

| Place of search | Date of completion of the search | Examiner |
|---|---|---|
| The Hague | 29 June 2023 | Aoun, Marc |

EPO FORM 1503 03.82 (P04C01)